(19) **Europäisches Patentamt / European Patent Office / Office européen des brevets**

(11) **EP 4 787 229 A1**

(12) **EUROPEAN PATENT APPLICATION**

(43) Date of publication:
05.08.2026 Bulletin 2026/32

(21) Application number: 26153195.8

(22) Date of filing: 21.01.2026

(51) International Patent Classification (IPC):
$G06N\ 3/02^{(2006.01)}$ $\quad G06N\ 3/09^{(2023.01)}$
$G06N\ 10/60^{(2022.01)}$

(52) Cooperative Patent Classification (CPC):
G06N 10/60; G06N 3/02; G06N 3/09

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.01.2025 US 202519042679

(71) Applicant: Fujitsu Limited
Kawasaki-shi, Kanagawa 211-8588 (JP)

(72) Inventors:
- Sharan Mourya, BATHALA
  Santa Clara, 95054 (US)
- Bibhas, ADHIKARI
  Santa Clara, 95054 (US)
- Hannes, LEIPOLD
  Santa Clara, 95054 (US)

(74) Representative: Haseltine Lake Kempner LLP
Cheapside House
138 Cheapside
London EC2V 6BJ (GB)

(54) **MULTI-DATA QUANTUM GENERATIVE NETWORK LEARNING AND INFERENCE**

(57) In an embodiment, a parameterized quantum circuit is initialized on a quantum computer for a Quantum Neural Network (QNN) with an ansatz architecture. Input data, which includes a quantum representation of a multi-dataset and an initial state of the QNN, and labels, is received. The quantum representation of the multi-datasets on the QNN is loaded and a first dataset of the multi-dataset is labelled. A label-controlled circuit associated with label-controlled input qubits of the ansatz architecture for the QNN is determined, based on the labelled first dataset. A universal circuit associated with the ansatz architecture for a prediction circuit associated with the QNN is determined, based on labelled first dataset. The prediction circuit is determined based on the label-controlled circuit and the universal circuit. The prediction circuit is trained and configured to generate predictions associated with the loaded fractionally weighted data portfolios.

FIG. 4

## Description

FIELD

The embodiments discussed in the present disclosure are related to multi-data quantum generative network learning and inference.

BACKGROUND

Quantum computing leverages quantum bits, or qubits, that exist in multiple states simultaneously due to superposition and entanglement. The multiple states enable quantum computers to perform complex calculations much faster than traditional binary computers, that use bits that are either "0" or "1". However, the quantum computing faces several challenges, particularly in integrating classical memory systems for operation control. Current quantum computers, often improve generative and reservoir computing models. The quantum computers may leverage Quantum Generative Adversarial Networks (QGANs) and Quantum Reservoir Computing (QRC). The QGANs represent a fusion of classical Generative Adversarial Networks (GANs) with quantum computing techniques, aimed at enhancing the efficiency and performance of generative models. Herein, the integration of classical and quantum components in QGANs may be complex and may introduce inefficiencies. The communication between classical and quantum systems can be a bottleneck, affecting the overall performance of the model. The QRC may combine the concepts of reservoir computing with quantum computing to enhance multi-task machine learning. However, QRC may have a limited role and classical neural networks may be heavily used. Typically, augmentation based on task specification may occur only classically with a quantum reservoir used for all tasks.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

SUMMARY

According to an aspect of the disclosure, operations may include initializing, on a quantum computer, a parameterized quantum circuit that implements a quantum neural network (QNN) with an ansatz architecture. The operations further include receiving input data, including a quantum representation of a multi-datasets and an initial state of the QNN, and labels associated with the multi-datasets. The multi-datasets may correspond to fractionally weighted data portfolios. The operations further include loading the quantum representation of the multi-datasets on the QNN. The operations further include labelling a first dataset of the multi-datasets, based on the labels associated with the multi-datasets. The labelled first dataset may be represented by labelled qubits on the parameterized quantum circuit. The operations further include determining a label-controlled circuit associated with label-controlled input qubits of the ansatz architecture for the QNN, based on the labelled first dataset. The operations further include determining a universal circuit associated with the ansatz architecture for a prediction circuit associated with the QNN, based on the labelled first dataset. The operations further include determining the prediction circuit based on a combination of the label-controlled circuit and the universal circuit. The operations further include training the prediction circuit based on the labelled first dataset and the initial state associated with the QNN. The operations further include loading the fractionally weighted data portfolios on the labelled qubits and the label-controlled input qubits. The trained prediction circuit may be configured to generate predictions associated with the loaded fractionally weighted data portfolios.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a diagram representing an exemplary computing environment for multi-data quantum generative network learning and inference,

FIG. 2 is a block diagram of a system for multi-data quantum generative network learning and inference,

FIG. 3 is a flowchart of an example method for training a QNN on multi-dataset and deploying inference on multi-dataset representations,

FIG. 4 is a diagram that illustrates exemplary circuit implementation for a universal circuit and a label-controlled circuit ansatz for QNNs,

FIG. 5 is a diagram that illustrates exemplary circuit for sequence generation for portfolios with a trained QNN,

FIGs. 6A-6B are diagrams that illustrates exemplary circuit for label control augmentation,

FIGs. 7A-7F are schematic diagrams of layered circuit structures for the QNN, and

FIG. 8 is a flowchart of an example method for multi-data quantum generative network learning and inference,

all according to at least one embodiment described in the present disclosure.

## DESCRIPTION OF EMBODIMENTS

Embodiments of the present disclosure are explained with reference to the accompanying drawings.

Some embodiments described in the present disclosure relate to methods and systems for multi-data quantum generative network learning and inference. According to the present disclosure, on a quantum computer, a parameterized quantum circuit that implements a quantum neural network (QNN) with an ansatz architecture may be initialized. Input data may be received. The input data may include a quantum representation of a multi-datasets and an initial state of the QNN, and labels associated with the multi-datasets. The multi-datasets may correspond to fractionally weighted data portfolios (for example, financial/stock portfolios). The quantum representation of the multi-datasets may be loaded on the QNN. A first dataset of the multi-datasets may be labelled, based on the labels associated with the multi-datasets. The labelled first dataset may be represented by labelled qubits on the parameterized quantum circuit. A label-controlled circuit associated with label-controlled input qubits of the ansatz architecture may be determined for the QNN, based on the labelled first dataset. A universal circuit associated with the ansatz architecture may be determined for a prediction circuit associated with the QNN, based on the labelled first dataset. The prediction circuit may be determined based on a combination of the label-controlled circuit and the universal circuit, including a deep QNN with universal circuits and label-controlled circuits repeated similar to deep neural networks. The prediction circuit may be trained based on the labelled first dataset and the initial state associated with the QNN. The fractionally weighted data portfolios may be loaded on the labelled qubits and the label-controlled input qubits. The trained prediction circuit may be configured to generate predictions associated with the loaded fractionally weighted data portfolios.

Quantum computing holds a great promise for a variety of applications, which has fueled a quest to develop the necessary physical hardware. Quantum algorithms, for example, may factor numbers, simulate quantum systems, or solve linear systems of equations with an exponential speedup over classical methods. Due to the extremely high computational cost, applications such as simulating complex quantum systems or solving large-scale linear algebra problems may be extremely difficult for classical computers. Although fault-tolerant quantum computers may unlikely be available in the near future, quantum computers, especially gate-based quantum computers, do promise a solution. Current quantum devices have significant limitations, such as, a limited number of qubits and noise processes that limit circuit depth.

Hybrid quantum-classical algorithms, such as, Quantum Approximate Optimization Algorithm (QAOA), may be typically used for obtaining approximate solutions of combinatorial optimization problems, such as, graph-based optimizations. At each call to the quantum computer, a trial state may be prepared by applying a sequence of pairs of alternating quantum operators. The two alternating operators may be referred to as a phase operator (which encodes the objective function of the combinatorial optimization problem), and a mixing operator. The QAOA may have limitations, such as, complexities in integration of classical and quantum components and inefficiencies.

Further, ensuring stable and efficient training of Quantum Generative Adversarial Networks (QGANs) may be a significant challenge. The potential advantages of QGANs may include faster convergence rates and the ability to handle high-dimensional data more efficiently. Implementation and experimental results may show the effectiveness of QGANs, with significant improvements in learning and generating random distributions compared to classical GANs. The QGANs may be applied in fields, such as, finance, cryptography, machine learning, and recommendation of future research directions, including exploring different quantum architectures and improving the scalability of QGANs. Furthermore, resource requirements for the QGANs may be substantial.

Typically, the digital quantum computers may have quantum digital representations (qubits and qudits) that are similar to the role of bits and digits in modern classical computers. The digital quantum computers may include circuits that may be defined by running a collection of gates over a qubit register. Here, the gates may be defined as controlled electromagnetic pulse sequences. Further, the gates may be unitary transformations that change a state, such as, an amplitude or a phase of a quantum state. Further, the gates may be parameterized, and the pulses may be controlled by electric signals stored in a memory bank similar to working memory, cache, and RAM in classical computers. A major problem may arise from the limitations of classical control over digital quantum systems, leading to challenges in the training of parameters to control the system.

The technological field of quantum generative network learning and inference may be improved by configuring an electronic device to use multi-data for the learning and inference. The electronic device may initialize, on a quantum computer, a parameterized quantum circuit that implements a quantum neural network (QNN) with an ansatz architecture. The electronic device may receive input data including a quantum representation of a multi-datasets and an initial state of the QNN, and labels associated with the multi-datasets. The multi-datasets may correspond to fractionally weighted data portfolios. The electronic device may load the quantum representation on the QNN. The electronic device may label a first dataset of the multi-datasets, based on the labels associated with the multi-datasets. The labelled first dataset may be represented by labelled qubits on the parameterized quantum circuit. The electronic device may determine a label-controlled circuit associated with label-controlled input qubits of the ansatz architecture for the QNN, based on the labelled first dataset. The electronic device may determine a universal circuit associated with the ansatz architecture for a prediction circuit associated with the QNN, based on the labelled first dataset. The electronic device may determine the prediction circuit based on a combination of the label-controlled circuit and the universal circuit. The electronic device may train the prediction circuit based on the labelled first dataset and the initial state associated with the QNN. The electronic device may load the fractionally weighted data portfolios on the labelled qubits and the label-controlled input qubits. The trained prediction circuit may be configured to generate predictions associated with the loaded fractionally weighted data portfolios.

The present disclosure may address typical problems of QNN training by providing a solution to exploit quantum phenomenon in many-body systems for global information extraction to accelerate the learning process and improve optimality of parameters. The present disclosure proposes an optimization of quantum neural networks (QNNs) for multi-data learning and inference, for example, in the context of financial asset datasets. The present disclosure significantly may reduce the required quantum resources. While representing thousands of data types naively in parallel would require tens of thousands of qubits, the proposed method may only require hundreds of qubits. The proposed method may use only tens of qubits for each quantum representation of the data type and leverage shared neural network resources. The shared neural network resources may help the network generalize better from training to test datasets. The shared neural network may reduce overfitting and improve the model's performance on unseen data. Further, the disclosed method may be a pure quantum approach that requires fewer resources and provides better generalization. It may involve training quantum networks for quantum multi-data representations and deploying inference with quantum representations of multi-data collections, such as, those with fractional weighting. Herein, by introducing a label qubit and utilizing a universal and controlled repeated ansatz circuit structure, the disclosed method may enable efficient training of a unified quantum network for multiple datasets with a limited overhead. The proposed method may perform inference for fractionally weighted data portfolios or inputs composed of multiple label types jointly. The proposed model may represent thousands of data types with tens of qubits for each data type representation, resulting in a total of hundreds of qubits. This is due to the logarithmic scaling with type, which is more efficient compared to existing joint learning methods that would require tens of thousands of qubits.

The circuit design may be a repeated universal and ancilla-controlled ansatz architecture for multi-task learning, designed to facilitate shared and typespecific quantum representations for collections of data. Data may be labeled, and training may occur with labelled data jointly, facilitating multi-data learning. The proposed method may show improved results on test datasets, similar to the motivation for multi-task learning in the classical setting.

The present disclosure may provide multi-data representations that are prevalent across various application domains, and the QNNs may offer distinct advantages over traditional neural networks, particularly for inference over fractionally weighted sets of mixed label inputs due to quantum superposition. This unique capability of the QNNs may enable more efficient and effective processing of complex data sets, making the QNNs highly valuable in fields that require handling diverse and high-dimensional data.

In portfolio analysis modeling, the QNNs can effectively manage portfolios, which consist of various types of assets. In pharmaceutical drug discovery, multi-data representations may enable the prediction and understanding of different compounds through shared representations. Additionally, the QNNs may facilitate real-time routing and logistics by processing different data types in parallel, and they can handle high-dimensional, diverse feature types in genomic analysis, allowing for efficient loading and analysis of large genomic datasets at inference time. Overall, the QNNs may provide significant value in such fields by leveraging quantum superposition for more efficient multi-data representation and inference.

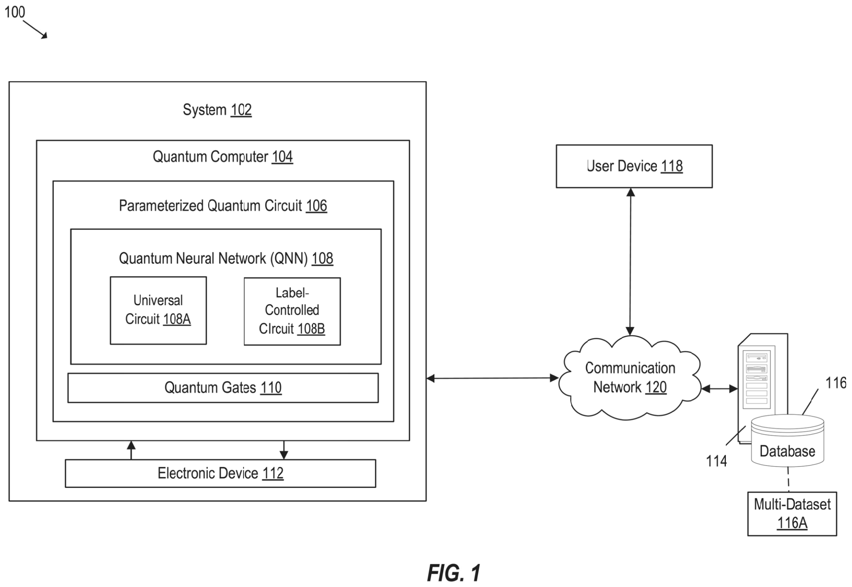

FIG. 1 is a diagram representing an exemplary computing environment for multi-data quantum generative network learning and inference, according to at least one embodiment described in the present disclosure. With reference to FIG. 1, there is shown a computing environment 100. The computing environment 100 includes a system 102, a user device 118, a host terminal 114 storing multi-datasets 116A, and a communication network 120. The system 102 includes a quantum computer 104 and an electronic device 112. As further shown, a parameterized quantum circuit 106 may be implemented on the quantum computer 104 and further a quantum neural network (QNN) 108 and quantum gates 110 may be implemented on the parameterized quantum circuit 106. The QNN 108 may include a universal circuit 108A and a label-controlled circuit 108B. In certain embodiments, the system 102 may be referred to as a trainer that trains quantum generative networks based on marginal and joint distribution. The system 102, the host terminal 114, and the user device 118 may be communicatively coupled to each other, via the communication network 120.

The system 102 may be a part of an on-premises computing environment or a cloud computing environment. The system 102 may include suitable logic, circuitry, and interfaces that may be configured to train the QNN 108 with a quantum representation of multi-datasets and deploying inference with quantum representations of multi-data collections, such as fractionally weighted data portfolios. The real-world optimization problem may be any optimization problem that can be associated overfitting and poor generalization to new data. For example, the real-world optimization problem may involve many training iterations due to slow convergence to optimal states. Further, despite numerous iterations the convergence of optimal states may remain poor. The system 102 may process labelled qubits and may utilize the universal circuit 108A and label-controlled circuit 108B to enable training of the prediction circuit to generate predictions associated with the loaded fractionally weighted data portfolios with limited overhead. Further, the system 102 may be exploited for the inference of the fractionally weighted data portfolios or input composed of multiple label types jointly.

The system 102 may include suitable logic, circuitry, and interfaces that may be configured to execute program instructions associated with the quantum computer 104. The system 102 may be a classical computer (i.e., a transistor-based computer with semiconductor-based digital circuitry) that operates in tandem or in conjunction with the quantum computer 104 to perform machine learning tasks. The system 102 may include both quantum hardware and the classical hardware configured to perform training of the quantum networks for quantum multi-data representations and deploying inference with the quantum representations of multi-data collections, such as the fractionally weighted data portfolios.

The quantum computer 104 may be a gate-based quantum computer that may be configured to receive an input and transform the input in accordance with a unitary operation (that may be defined as a sequence of quantum logic gate operations and measurements). The operation may be represented by the parameterized quantum circuit 106.

In one or more embodiments of the disclosure, the quantum computer 104 may be implemented as a generalized quantum computing device that may be hosted on a cloud optimization system. The cloud optimization system may be implemented as one of a private cloud, a public cloud, or a hybrid cloud. In such an implementation, a generalized quantum computing device may use specialized optimization solving software applications or simulation software at an application layer to implement hybrid quantum algorithms, such as, QAOA, to search for a solution of an optimization problem from a discrete solution space.

The generalized quantum computing device may be different from a digital bit-based computing device, such as, digital devices that are based on transistor-based digital circuits. The generalized quantum computing device may include one or more of the quantum gates 110 that use quantum bits (hereinafter referred to as "qubits") to perform computations for different information processing applications, such as QAOA computations for vias minimization in very large-scale integration (VLSI) design. In general, a qubit can represent "0", "1", or a superposition of both "0" and "1". In most cases, the generalized quantum computing device may need a carefully controlled cryogenic environment to function properly. The generalized quantum computing device may use certain properties found in quantum mechanical systems, such as quantum fluctuations, quantum superposition of its Eigenstates, quantum tunneling, and quantum entanglement. These properties may help the generalized quantum computing device to perform computations for solving certain mathematical problems (e.g., graph-based optimizations using QAOA circuits) to exhibit quantum advantage. Typically, these problems may be computationally intractable for conventional computing devices (e.g., classical computers that use transistor-based circuits). Examples of the generalized quantum computing device may include, but are not limited to, a silicon-based nuclear spin quantum computer, a trapped ion quantum computer, a cavity quantumelectrodynamics (QED) computer, a quantum computer based on nuclear spins, a quantum computer based on electron spins in quantum dots, a superconducting quantum computer that uses superconducting loops and Josephson junctions, and a nuclear magnetic resonance quantum computer.

In some other embodiments, the quantum computer 104 may be a special-purpose quantum computer that may be designed, and hardware/software optimized to implement QAOA or meta-heuristic algorithms such as quantum annealing. Similar to a generalized quantum computing device, the special-purpose quantum computer may use qubits and may require a carefully controlled cryogenic environment to function properly.

In some other embodiments, the quantum computer 104 may be a digital quantum-computing processor for multi-data quantum generative network learning and inference. More specifically, the quantum computer 104 may be implemented as a quantum simulation software that may be executable on a digital computer with a semiconductor-based processor. The quantum simulation software may be designed to model the functionality of the quantum computer 104 on digital circuitry. The digital computer may operate at room temperature and may not require a cryogenic environment to function.

In some other embodiments, the quantum computer 104 may include a processor to execute software instructions such as subroutines for the parameterized quantum circuit 106. Example implementations of the processor may include, but are not limited to, a Reduced Instruction Set Computing (RISC) processor, an Application-Specific Integrated Circuit (ASIC) processor, a Complex Instruction Set Computing (CISC) processor, a Graphical Processing Unit (GPU), a Co-processor, and/or a combination thereof. In an embodiment, the quantum computer 104 may correspond to at least one of, but not limited to, quantum processors, digital quantum computers, quantum computers based on microwave-pulses acting on superconducting devices, or quantum computers based on laser pulses acting on ion-trap devices.

The parameterized quantum circuit 106 may correspond to a computational routine (i.e., a set of instructions) that combines coherent quantum operations on quantum data, such as, qubits, with real-time classical computations. The parameterized quantum circuit 106 may include an ordered series of the quantum gates 110, measurements, and resets that may be all be conditioned on real-time classical computation and may use data gathered from classical computation. In accordance with an embodiment, the parameterized quantum circuit 106 may be a QAOA circuit that includes a set of the quantum gates 110 for operators (e.g., phase and mixing operators) and a set of qubits (e.g., logical qubits that represent physical qubits) on which the operators and the quantum gates 110 may be configured to operate. For QAOA, the quantum gates 110 may include, for example, one or more Hadamard gates, Rx and Rz gates (i.e., Rotation Operators), and a CNOT gate. The ansatz (and the parameterized quantum circuit 106) may vary depending on the multi-datasets 116A.

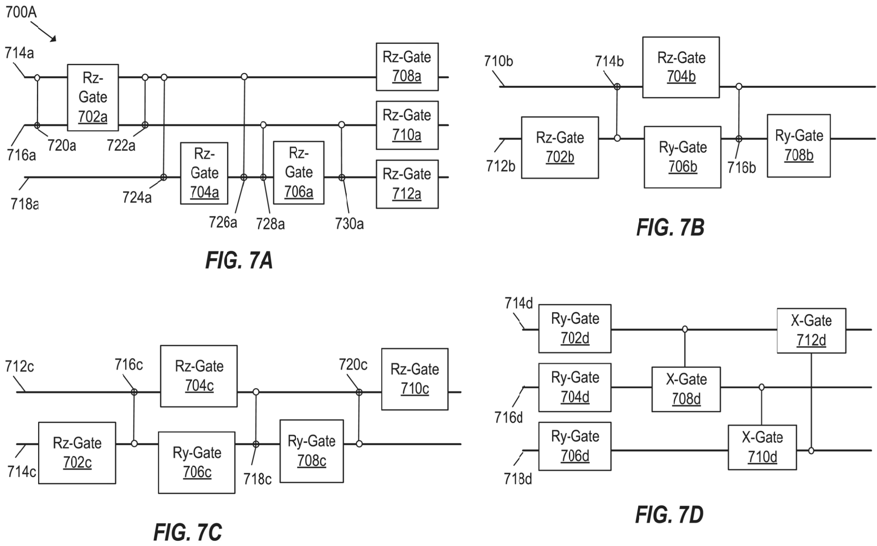

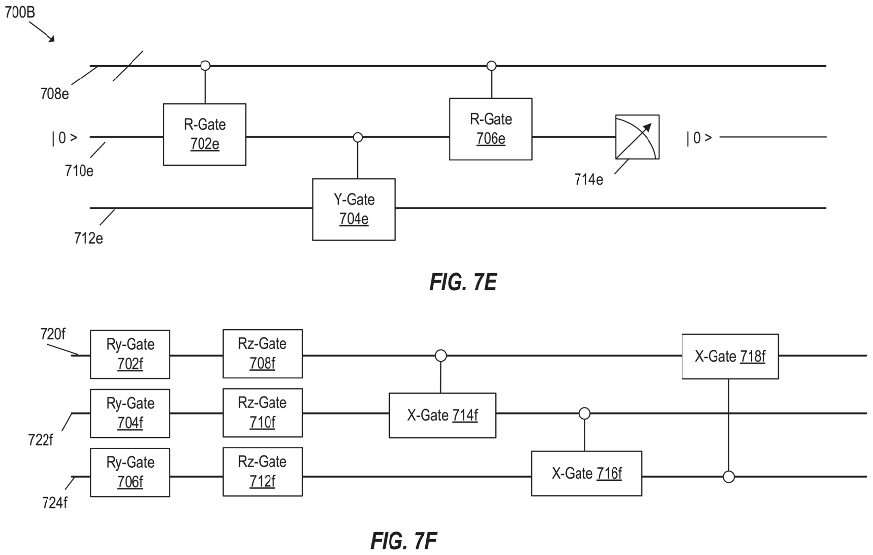

In accordance with an embodiment, the parameterized quantum circuit 106 may include one or more neural networks (NNs) layer such as the QAOA-like layer (as shown in FIG. 7A) , a pooling layer (as shown in FIG. 7B), a convolutional layer (as shown in FIG. 7C), a real amplitude layer (as shown in FIG. 7D), a quantum neuron layer (as shown in FIG. 7E), an efficient SU2 layer (as shown in FIG. 7F), and the likes.

The QNN 108 (i.e., the Variational Quantum Classifier (VQC)) may correspond to a computational routine (i.e., a set of instructions) that combines coherent quantum operations on quantum data, such as, qubits, with real-time classical computations. The VQC may include an ordered series of the quantum gates 110 , measurements, and resets that may be all be conditioned on real-time classical computation and may use data gathered from classical computation. In accordance with an embodiment, the VQC may be the parameterized quantum circuit 106 that includes the quantum gates 110 for operators (e.g., phase and mixing operators) and a set of qubits (e.g., logical qubits that represent physical qubits) on which the operators and the quantum gates 110 may be configured to operate. The ansatz architecture may vary depending on the multi-datasets 116A that may be used to train the QNN 108.

As used herein, the ansatz architecture refers to a specific design or structure of a parameterized quantum circuit 106 used in variational quantum algorithms (VQAs). The ansatz architecture involves the arrangement and types of a set of quantum gates (such as, the quantum gates 110) and layers that may form the system 102. The system 102 may be used for approximation of a target unitary operator or prepare a quantum state, such as, "$|0\rangle$" or "$|1\rangle$". The ansatz architecture may be fixed or variable. For example, the fixed structure ansatzes may be a Hardware Efficient Ansatz (HEA) and a Unitary Coupled Cluster (UCC) Ansatz. In another example, the variable structure ansatzes may adapt the circuit design to optimize performance for specific tasks. The expressibility, trainability, and overall effectiveness of the quantum computer 104 may be based on the ansatz architecture.

The QNN 108 may further include the universal circuit 108A and the label-controlled circuit 108B, such that a prediction circuit may be determined based on a combination of the universal circuit 108A and the label-controlled circuit 108B. The universal circuit 108A may be composed of a set of quantum gates (such as, the quantum gates 110) that may approximate a unitary transformation on a set of qubits. The universal circuit 108A may be executed on a quantum computer, facilitating applications from cryptography to complex simulations. The label-controlled circuit 108B may operate with conditioned states of control qubits that may allow complex computations through conditional logic. As used herein, the term "control qubits" may refer to qubits that may determine whether certain operations may be executed on other qubits. For example, in a Controlled-NOT (CNOT) gate, a second qubit (target) may be flipped only when a first qubit (control) may be in a certain state (such as, '$|0\rangle$" or "$|1\rangle$"). Further, in an embodiment, the label-controlled circuit 108B may control the quantum representation of the multi-datasets 116A based on value (or sub-value) of the labels associated with the multi-datasets 116A.

In an embodiment, the quantum computer 104 may be a gate-based quantum computer that may be configured to receive an input and transform the input in accordance with a unitary operation (that may be defined as a sequence of quantum gate operations and measurements).

The quantum gates 110 may be the basic building blocks of quantum circuits or the quantum computer 104 that may be used to manipulate the quantum state of qubits. The quantum gates 110 may be mathematical operations that act on the state of one or more qubits and may be represented by a matrix. The quantum gates 110 may leverage key aspects of quantum mechanics, such as superposition and entanglement, to perform operations that may not be possible with classical gates. The quantum gates 110 may be unitary operators described as unitary matrices relative to some orthonormal basis. In an embodiment, the quantum gates 110 may include, for example, one or more Hadamard gates, Rx and Rz gates (i.e., Rotation Operators), and a CNOT gate, Pauli gates (X, Y, Z), and a T gate. The quantum gates 110 may be essential for performing quantum algorithms and are analogous to classical logic gates in conventional digital circuits. The quantum gates 110 may use quantum bits (hereinafter referred to as "qubits") to perform computations for different information processing applications. In general, a qubit can represent "0", "1", or a superposition of both "0" and "1". In most cases, the generalized quantum computing device may need a carefully controlled cryogenic environment to function properly.

The electronic device 112 may include suitable logic, circuitry, and interfaces that may be configured to execute program instructions associated with a digital computer configured to train the QNN 108116A. The electronic device 112 may be a classical computer (i.e., a transistor-based computer with semiconductor-based digital circuitry) that operates in tandem or in conjunction with the quantum computer 104 to train the QNN 108 to perform machine learning tasks. In an embodiment, the electronic device 112 may operate in tandem or in conjunction with the quantum computer 104 to solve optimization problems.

The host terminal 114 may include suitable logic, circuitry, and interfaces that may be configured to display a User Interface (UI) with option(s) to configure and submit a real-world optimization problem, The host terminal 114 may communicate with the system 102 via a network interface. Examples of the host terminal 114 may include, but are not limited to, a mobile device, a desktop computer, a laptop, a virtual machine, a computer workstation, or a server such as a cloud server. The host terminal 114 may maintain the multi-datasets 116A to train the QNN 108.

The quantum representation of the multi-datasets 116A may be received on the system 102. The multi-datasets 116A may correspond to fractionally weighted data portfolios (e.g., a financial asset dataset). Further, the multi-datasets 116A may be stored in a database 116 on the host terminal 114. The database 116 may include suitable logic, circuitry, interfaces, and/or code that may be configured to store a training dataset (such as, the multi-datasets 116A). The database 116 may be derived from data off a relational or non-relational database, or a set of comma-separated values (csv) files in a conventional storage or a big-data storage. The database 116 may be stored or cached on a device, such as, the host terminal 114 or the electronic device 112. The device storing the database 116 may be configured to receive a query for the multi-datasets 116A. In response, the device storing the database 116 may be configured to retrieve and transmit the multi-datasets 116A to the host terminal 114 and/or electronic device 112.

In accordance with an embodiment, the database 116 may be hosted on a plurality of servers stored at same or different locations. The operations of the database 116 may be executed using hardware including a processor, a microprocessor (for example, to perform or control performance of one or more operations), a field-programmable gate array (FPGA), or an application-specific integrated circuit (ASIC). In some other instances, the database 116 may be implemented using software. A person with ordinary skill in the art will understand that the scope of the disclosure may not be limited to the implementation of the database 116 and the host terminal 114 (or the electronic device 112) as two separate entities. In certain embodiments, the functionalities of the database 116 can be incorporated in its entirety or at least partially in the host terminal 114 (or the electronic device 112), without a departure from the scope of the disclosure.

The user device 118 may include suitable logic, circuitry, and interfaces that may be configured to render a User Interface (UI) with option(s) to configure and submit a dataset (i.e., input data points and labels corresponding to the input data points) that may be associated with training of the QNN 108. The UI may further render parameters of the QNN 108, and a cost function value associated with the QNN 108, which may be determined at each time-step. Also, the UI may be configured to render data related to the fractionally weighted data portfolios. The user device 118 may communicate with the system 102 via a network interface, such as, the communication network 120. Examples of the user device 118 may include, but are not limited to, a mobile device, a desktop computer, a laptop, a virtual machine, a computer workstation, or a server such as a cloud server.

The communication network 120 may include a communication medium through which the system 102, the host terminal 114, and the user device 118 may communicate with each other. The communication network 120 may be one of a wired connection or a wireless connection. Examples of the communication network 120 may include, but are not limited to, the Internet, a cloud network, Cellular or Wireless Mobile Network (such as Long-Term Evolution and 5G New Radio), a satellite network (such as, a network of a set of low-earth orbit satellites), a Wireless Fidelity (Wi-Fi) network, a Personal Area Network (PAN), a Local Area Network (LAN), or a Metropolitan Area Network (MAN). Various devices in the computing environment 100 may be configured to connect to the communication network 120 in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols.

In operation, the system 102 may initialize the parameterized quantum circuit 106 on the quantum computer 104. The parameterized quantum circuit 106 may implement the QNN 108 with an ansatz architecture. In an embodiment, the ansatz architecture may be a share-and-specify ansatz architecture. Further, the ansatz architecture may vary depending on the multi-datasets 116A that may be used to train the QNN 108. The ansatz architecture may involve an arrangement and types of quantum gates 110 and layers that form the system 102. In an embodiment, the ansatz architecture may be fixed or variable. For an exemplary embodiment, the ansatz architecture may be a Bethe ansatz, a Coupled Cluster ansatz, a Layered Gate ansatz, a Tensor Network ansatz, and the like.

After initializing the parameterized quantum circuit 106, the system 102 may receive input data that may include a quantum representation of the multi-datasets 116A and an initial state of the QNN 108, and further include labels associated with the multi-datasets 116A. The multi-datasets 116A may correspond to fractionally weighted data portfolios. The quantum representation of the multi-datasets 116A may be qubits and qudits. The role of the qubits may be similar to that of the bits in the conventional computers, further the role of the qudits may be similar to that of the digits in the conventional computers. Further, the initial state of the QNN 108 may depend on the specific architecture associated with QNN 108. The initial state of the QNN 108 may be in one of a pure state, a mixed state, a superposition states, a coherent state, an arbitrary state, and an input-dependent state. For example, the pure state may include $'|0\rangle"$ and $"|1\rangle"$; and the mixed state may include a mixture of different pure states. Typically, due to an incomplete knowledge about the system 102, the initial superposition states may include be a state in which the system 102 may exist in multiple states simultaneously.

In an embodiment, the labels associated with the multi-datasets 116A may be labelled qubits. Each datapoint input of the multi-datasets 116A may be represented over "n" qudit registers in the system 102, thus the system 102 may require $n*L$ qudits to represent "L" labelled datapoint inputs (through concatenation). Further, each label associated with each datapoint of the multi-datasets 116A may be a shared representation over n qudit registers and a representation over log(L) qubit registers for the associated label.

The fractionally weighted data portfolios may be assigned weights to the datapoints of the multi-datasets 116A in such a way that may reflect the relative importance or contribution of the datapoints in the multi-datasets 116A. The datapoints that may be assigned with fractional weighting may allow each datapoint of the multi-datasets 116A to represent a fraction of weight rather than a whole number. For example, if a dataset has four datapoints, then each datapoint might be assigned a weight of 0.25. Thus, when all weights may be added, the added weights may represent the total number of distinct datapoints associated with the dataset of the multi-datasets 116A. For an exemplary embodiment, the fractionally weighted data portfolios may be representations over $\log(L)*n$ by exploiting distribution loading on the system 102, leveraging a quantum phenomenon that may not be available to conventional computers.

The system 102 may load the quantum representation of the multi-datasets 116A on the QNN 108. In an embodiment, the qubits and the qudits associated with the multi-datasets 116A may be loaded on the QNN 108. Further, the system 102 may select the first dataset from the multi-datasets 116A to label the first dataset. The system 102 may label the first dataset of the multi-datasets 116A, based on the labels associated with the multi-datasets 116A. The labelled first dataset may be represented by labelled qubits on the parameterized quantum circuit 106.

Next, the system 102 may determine the label-controlled circuit 108B associated with label-controlled input qubits of the ansatz architecture for the QNN 108, based on the labelled first dataset. The label-controlled circuit 108B may include a sequence of layers. Further, each layer of the sequence of layers may correspond to at least one of a Quantum Alternating Operator Ansatz (QAOA)-layer, a Quantum Annealing (QA)-layer, a pooling layer, a conventional layer, an efficient special unitary group of degree 2 (SU2)-layer, a real amplitudes layer, or a quantum neuron layer. The details associated with the QAOA-layer, the QA-layer, the pooling layer, the conventional layer, the efficient special unitary group of degree 2 (SU2)-layer, the real amplitudes layer, or the quantum neuron layer is omitted for the sake of brevity. Furthermore, the label-controlled circuit 108B may be associated with a specialized representation based on control parameters to label the input data. Herein, the label-controlled circuit 108B may be associated with the specialized representation as the parameterized quantum circuit 106 may be associated with a share-and-specify ansatz architecture.

After the determination of the label-controlled circuit 108B, the system 102 may determine the universal circuit 108A associated with the ansatz architecture for a prediction circuit associated with the QNN 108, based on the labelled first dataset. As used herein, the term "prediction circuit" may refer to a framework that may utilize the universal circuit 108A associated with the ansatz architecture to predict various properties for example, entanglement, super position, or any other quantum states. The universal circuit 108A may be associated with a shared representation for the input data, output data, and intermediary qubits. Herein, universal circuit 108A may be associated with the shared representation as the parameterized quantum circuit 106 may be associated with a share-and-specify ansatz architecture. Further, the universal circuit 108A may include the sequence of layers. Where, each layer of the sequence of layers corresponds to at least one of the QAOA-layer, the QA-layer, the pooling layer, the conventional layer, the efficient special unitary group of degree 2 (SU2)-layer, the real amplitudes layer, or the quantum neuron layer. Furthermore, each layer of the sequence of layers may include a quantum gate of the quantum gates 110 with stored control parameters. In another embodiment, each layer of the sequence of layers includes a first quantum gate and a control quantum gate configured to control the first quantum gate. Further, each quantum gate of the quantum gates 110 in the sequence of layers may be augmented for qubits or qudit control. In an embodiment, each first layer of the sequence of layers may be different from layers, of the sequence of layers, other than the first layer.

Next, the system 102 may determine the prediction circuit based on a combination of the label-controlled circuit 108B and the universal circuit 108A. The prediction circuit may be generated by repeatedly applying the QNN 108 over the fractionally weighted data portfolios. Further, the system 102 may train the prediction circuit based on the labelled first dataset and the initial state associated with the QNN 108. Herein, the trained prediction circuit may be configured to generate predictions associated with the loaded fractionally weighted data portfolios.

Next, the system 102 may deploy the QNN 108 for inference of the fractionally weighted data portfolios. In an embodiment, the QNN 108 may correspond to at least one of a Quantum Born Machine, a Quantum Boltzmann Machine, a ZZ feature map, an amplitude loading circuit, or a Grover-Rudolph circuit. In another embodiment, the quantum hardware may correspond to at least one of: quantum processors, digital quantum computers, quantum computers based on microwave-pulses acting on superconducting devices, or quantum computers based on laser pulses acting on ion-trap devices. Further, the system 102 may load the fractionally weighted data portfolios on the labelled qubits and the label-controlled input qubits. The trained prediction circuit may be configured to generate predictions associated with the loaded fractionally weighted data portfolios.

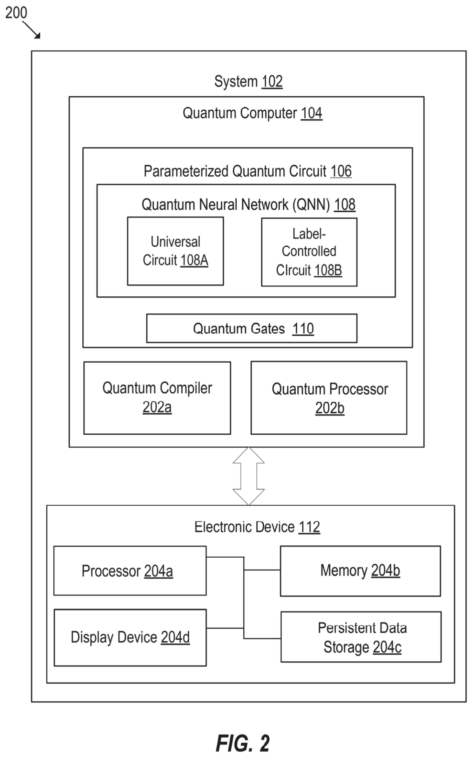

FIG. 2 is a block diagram of a system for multi-data quantum generative network learning and inference, according to at least one embodiment of the disclosure. FIG. 2 is explained in conjunction with elements from FIG. 1. With reference to FIG. 2, there is shown a block diagram 200 of the system 102. The system 102 includes the quantum computer 104 and the electronic device 112. As shown, for example, the quantum computer 104 may be a gate-based quantum computer that includes the parameterized quantum circuit 106, a quantum compiler 202a, and a quantum processor 202b. Further, the parameterized quantum circuit 106 includes the Quantum Neural Network (QNN) 108, and the quantum gates 110. Furthermore, the QNN 108 includes the universal circuit 108A and the label-controlled circuit 108B Similarly, the electronic device 112 includes a processor 204a, memory 204b, a persistent data storage 204c, and a display device 204d. The processor 204a and the quantum processor 202b may be referred to as one or more processors of the system 102.

Typically, a compiler is a computer program that is configured to translate computer code between two languages, i.e., source and target languages, Since quantum algorithms require error-free qubits and logic gates, the quantum compiler 202a may be configured to translate operations of the quantum gates 110 used in quantum algorithms, such as, the QAOA, into machine level operations and reduce loss of quantum information because of decoherence. A compiler for a gate-based quantum computer may perform synthesis of the quantum gates 110 at both physical and logical layers.

The quantum compiler 202a may operate on sequence of instructions (e.g., the parameterized quantum circuit 106) to ensure that such instructions are executable on the quantum computer 104. Such instructions may utilize quantum instruction sets to turn high-level algorithms into physical instructions that may be executable on the quantum processor 202b.

The quantum processor 202b (also referred to as a quantum processing unit (QPU)) may refer to a physical device (e.g., a chip) that may include a set of interconnected qubits. The quantum processor 202b may typically include a housing environment (e.g., a cooling mechanism to achieve cryogenic temperature), a control system for the quantum processor 202b, and the like.

The processor 204a may include suitable logic, circuitry, and/or interfaces that may be configured to execute program instructions associated with different operations to be executed by the system 102. The processor 204a may include any suitable special-purpose or general-purpose computer, computing entity, or processing device including various computer hardware or software modules and may be configured to execute instructions stored on any applicable computer-readable storage media. For example, the processor 204a may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 2, the processor 204a may include any number of processors configured to, individually or collectively, perform or direct performance of any number of operations of the system 102, as described in the present disclosure.

In some embodiments, the processor 204a may be configured to interpret and/or execute program instructions and/or process data stored in the memory 204b and/or the persistent data storage 204c. In some embodiments, the processor 204a may fetch program instructions from the persistent data storage 204c and load the program instructions in the memory 204b. After the program instructions are loaded into memory 204b, the processor 204a may execute the program instructions. Some of the examples of the processor 204a may be a GPU, a CPU, a RISC processor, an ASIC processor, a CISC processor, a co-processor, and/or a combination thereof.

The memory 204b may include suitable logic, circuitry, and/or interfaces that may be configured to store program instructions executable by the processor 204a. In certain embodiments, the memory 204b may be configured to store the multi-dataset 116A. The memory 204b may include computer-readable storage media for carrying or having computer-executable instructions or data structures stored thereon. Such computer-readable storage media may include any available media that may be accessed by a general-purpose or special-purpose computer, such as the processor 204a.

By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 204a to perform a certain operation or group of operations associated with the system 102.

The persistent data storage 204c may include suitable logic, circuitry, and/or interfaces that may be configured to store program instructions executable by the processor 204a, operating systems, and/or application-specific information, such as logs and application-specific database 116s. The persistent data storage 204c may be configured to store information, such as the set of mathematical formulations associated with the real-world optimization problem. The persistent data storage 204c may include computer-readable storage media for carrying or having computer-executable instructions or data structures stored thereon. Such computer-readable storage media may include any available media that may be accessed by a general-purpose or special-purpose computer, such as the processor 204a.

By way of example, and not limitation, such computer-readable storage media may include tangible or non-transitory computer-readable storage media including Compact Disc Read-Only Memory (CD-ROM) or other optical disk storage, magnetic disk storage or other magnetic storage devices (e.g., Hard-Disk Drive (HDD)), flash memory devices (e.g., Solid State Drive (SSD), Secure Digital (SD) card, other solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 204a to perform a certain operation or group of operations associated with the system 102.

Modifications, additions, or omissions may be made to the system 102 without departing from the scope of the present disclosure. For example, in some embodiments, the system 102 may include any number of other components that may not be explicitly illustrated or described.

The display device 204d may include suitable logic, circuitry, and interfaces that may be configured to display inputs provided by the user device 118 (and/or the host terminal 114) and outputs generated by the system 102. The display device 204d may be a touch screen which may enable a user to provide user-inputs via the display device 204d. The touch screen may be at least one of a resistive touch screen, a capacitive touch screen, or a thermal touch screen. The display device 204d may be realized through several known technologies such as, but not limited to, a Liquid Crystal Display (LCD) display, a Light Emitting Diode (LED) display, a plasma display, or an Organic LED (OLED) display technology, or other display devices. In accordance with an embodiment, the display device 204d may refer to a display screen of a head mounted device (HMD), a smart-glass device, a see-through display, a projection-based display, an electro-chromic display, or a transparent display.

Although not illustrated, the quantum computer 104 may have a hierarchical architecture with layers such as a physical layer, a virtual layer, an error correction layer, a logical layer, and an application layer. The physical layer may include hardware including, but not limited to, physical qubits and control operations. The virtual layer may incorporate error cancellation and may be responsible for collecting quantum dynamics of qubits and shaping them into virtual qubits and quantum gates. The error correction layer may incorporate quantum error correction logic for fault-tolerant quantum computing. The logical layer may support universal quantum computing by acting as a hardware-independent layer. The application layer may be a hardware independent layer that relies on logical qubits. The application layer may receive quantum algorithm as a sequence of high-level operations, including the parameterized quantum circuit 106.

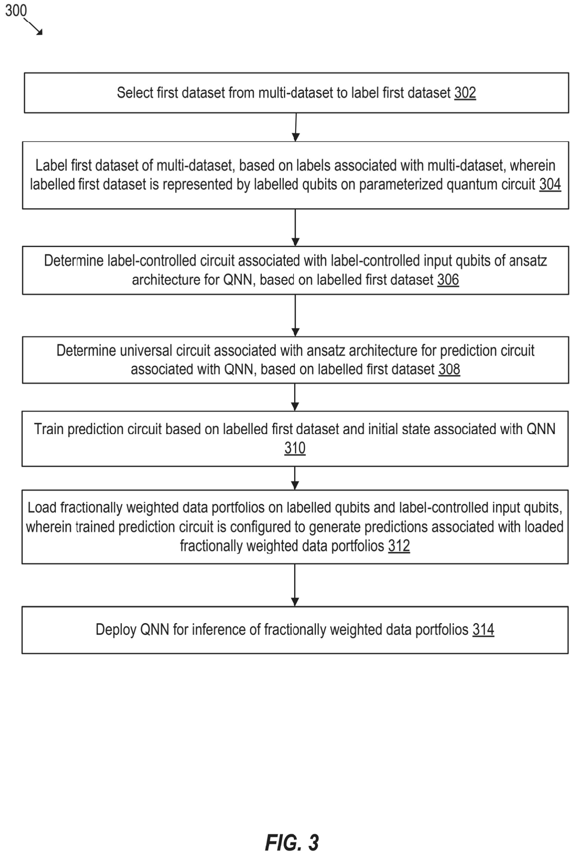

FIG. 3 is a flowchart of an example method for training a QNN on multi-dataset and deploying inference on multi-dataset representations, in accordance with an embodiment of the disclosure. FIG. 3 is explained in conjunction with elements from FIG. 1 and FIG. 2. With reference to FIG. 3, there is shown a flowchart 300 that illustrates exemplary operations, as described herein. With reference to FIG. 3, there is shown a flowchart 300. The example method illustrated in the flowchart 300 may start at 302 and may be performed by any suitable system, apparatus, or device, such as by the system 102 of FIG. 1.

At 302, a first dataset may be selected from a multi-dataset to label the first dataset. The system 102 may be configured to select the first dataset from the multi-dataset 116A to label the first dataset. The system 102 may initialize the parameterized quantum circuit 106 that implements the QNN 108 with an ansatz architecture on the quantum computer 104. The system 102 may receive the input data, including the quantum representation of the multi-dataset 116A and an initial state of the QNN 108, and labels associated with the multi-dataset 116A. The multi-dataset 116A may correspond to fractionally weighted data portfolios. Further, the system 102 may load the quantum representation of the multi-datasets 116A on the QNN 108. Herein, the qubits and the qudits associated with the multi-datasets 116A may be loaded on the QNN 108.

For example, the system 102 may initialize the parameterized quantum circuit 106 such that, $G(\theta)|x\rangle_n = |\psi(x)\rangle_n$. Further, the system 102 may receive the input data $"x"$ that includes multi-dataset 116A, such as, $"x_1, y_1", \dots, "x_N, y_N"$, a generated state $"|\psi(x)\rangle"$ and the initial state (i.e., $"\sum_x \sqrt{p(x)}|x\rangle_n"$, for example the frequency distribution defined by the multi-dataset) such that, expression (1), as follows, is satisfied:

$$\sum_x \sqrt{p(x)}G(\theta)|x\rangle_n = \sum_x \sqrt{p(x)}|\psi(x)\rangle_n \qquad (1)$$

where, the "$p(x)$" may represent a probability distribution from which values may be sampled from the multi-dataset 116A;

"$G(\theta)$" may represent the QNN 108;

"$|x\rangle_n$" may represent the input data; and

"$|\psi(x)\rangle_n$" may represent the generated state.

At 304, the first dataset of the multi-dataset 116A may be labelled, based on labels associated with the multi-dataset116A. The labelled first dataset may be represented by labelled qubits on the parameterized quantum circuit 106. The system 102 may be configured to label the first dataset of the multi-dataset 116A, based on the labels associated with the multi-dataset 116A. For example, the first dataset of the multi-dataset 116A may be $"x_1^l, y_1^l", \ldots, "x_{N(l)}^l y_{N(l)}^l"$ and the label for the first dataset may be "$l \in \{1, ..., L\}$". Further, if the input data is "$x_l$", the label may be given as "$l$", and the generated state may be "$|\psi(x_l)\rangle$".

At 306, a label-controlled circuit associated with label-controlled input qubits of the ansatz architecture for the QNN may be determined, based on the labelled first dataset. The system 102 may be configured to determine the label-controlled circuit 108B associated with label-controlled input qubits of the ansatz architecture for the QNN 108, based on the labelled first dataset. The label-controlled circuit 108B may be include a sequence of layers. Herein, the label-controlled circuit 108B may be associated with a specialized representation as the parameterized quantum circuit 106 may be associated with the share-and-specify ansatz architecture.

At 308, a universal circuit associated with the ansatz architecture may be determined for a prediction circuit associated with the QNN, based on the labelled first dataset. The system 102 may be configured to determine the universal circuit 108A associated with the ansatz architecture for a prediction circuit associated with the QNN 108, based on the labelled first dataset. As used herein, the term "prediction circuit" refers to a framework that may utilize the universal circuit 108A associated with the ansatz architecture to predict various properties, for example, but not limited to, entanglement, superposition, or any other quantum states. The universal circuit 108A may be associated with a shared representation for the input data, output data, and intermediary qubits. Herein, the universal circuit 108A may be associated with the shared representation as the parameterized quantum circuit 106 may be associated with a share-and-specify ansatz architecture. Further, the universal circuit 108A may include the sequence of layers. Herein, each layer of the sequence of layers may correspond to at least one of, but not limited to, the QAOA-layer, the QA-layer, the pooling layer, the conventional layer, the efficient special unitary group of degree 2 (SU2)-layer, the real amplitudes layer, or the quantum neuron layer. Furthermore, each layer of the sequence of layers may include a quantum gate of the quantum gates 110 with stored control parameters. In another embodiment, each layer of the sequence of layers may include a first quantum gate and a control quantum gate configured to control the first quantum gate. Further, each quantum gate of the quantum gates 110 in the sequence of layers may be augmented for qubit or qudit control. In an embodiment, each first layer of the sequence of layers may be different from layers, of the sequence of layers, other than the first layer. The system 102 may determine the prediction circuit based on the combination of the label-controlled circuit 108B and the universal circuit 108A. The prediction circuit may be generated by repeatedly applying the QNN 108 over the fractionally weighted data portfolios.

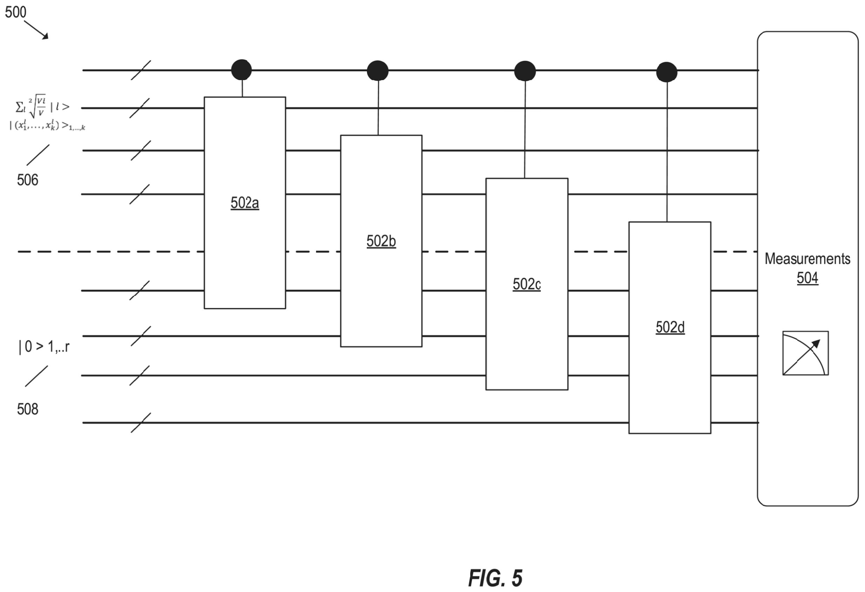

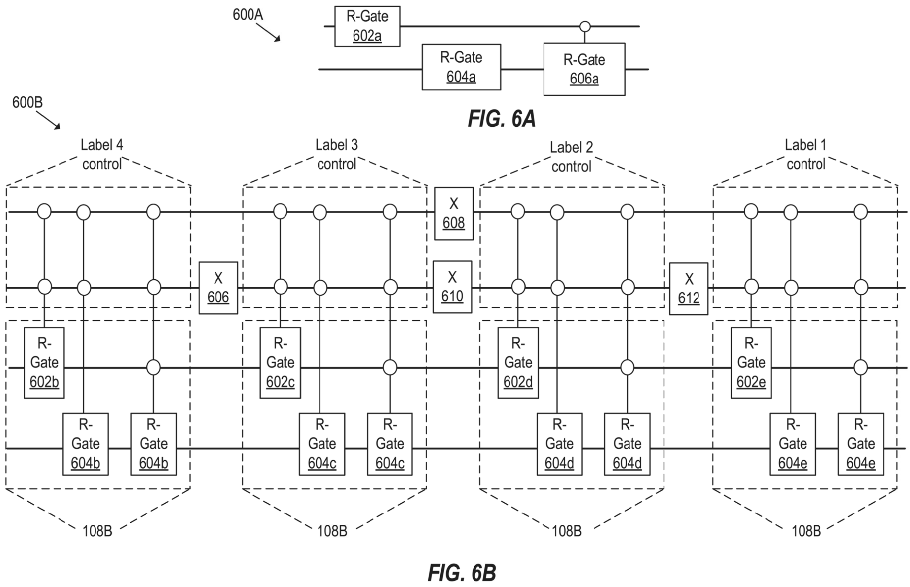

For example, the QNN 108 may be based on share-and-specify ansatz architecture. The QNN 108 may be the collection of the quantum gates 110 (i.e. specific pulse structures on the system 102) with classical control parameters that may be are stored in the memory 204b. The QNN 108 may be the sequence of layers, where each layer may include individual gates of the quantum gates 110. Further in an embodiment, each layer of the sequence of layers may be associated with a pair of the quantum gates 110. The quantum gates 110 may include a first set of quantum gates that may correspond to a first set of registers, and a second set of quantum gates that may correspond to the first set of register based on values of a second set of registers. The second set of registers may be associated with the label-controlled circuit 108B. Further, the label-controlled circuit 108B may include a control gate that may control component on the second set of registers and rotation or transformation the first set of registers. In an embodiment pair of layers of the sequence of layers may be repeated to form the QNN 108, with different embodiments specifying the structure of the quantum gates 110 inside the layer, as shown and described, for example, in FIG. 5, FIG. 6A, and FIG. 6B.

At 310, the prediction circuit may be trained based on the labelled first dataset and the initial state associated with the QNN. The system 102 may be configured to train the prediction circuit based on the labelled first dataset and the initial state associated with the QNN 108. Herein, the trained prediction circuit may be configured to generate predictions associated with the first dataset from multi-dataset 116A.

At 312, fractionally weighted data portfolios may be loaded on labelled qubits and label-controlled input qubits. The system 102 may be configured to load the fractionally weighted data portfolios on the labelled qubits and the label-controlled input qubits. Herein, the trained prediction circuit may be configured to generate predictions associated with the loaded fractionally weighted data portfolios, as the fractionally weighted data portfolios may be associated with the first dataset from the multi-dataset 116A. Further in an embodiment, the system 102 may apply the QNN 108 repeatedly over the fractionally weighted data portfolios to generate the prediction circuit.

At 314, the QNN may be deployed for inference of the fractionally weighted data portfolios. The system 102 may be configured to deploy the QNN 108 for inference of the fractionally weighted data portfolios. The system 102 may load the fractionally weighted data portfolios for inference in a superposition over a collection of labels "L". For example, the fractionally weighted data portfolios may be represented in expression (2), as follows:

$$\sum_l \sqrt{p(l)} \, |x\rangle_n |l\rangle_{\log(L)} \qquad (2)$$

For example, in a scenario, the received input data (given as "$x_{input}$") corresponds to a current price of an asset, and "$p(y|x_{input})$" represents a probabilistic prediction for future prices of the asset. In such a case, the system 102 may require "n" qudits for the input data, and for a million assets, the system 102 may require 20 qubits to represent labels "$l_1$", "$l_2$", ..., "$l_{10^6}$". Further, in case, a value of each label is "$V(l_i)$", a total value of all assets may be "$\sum_{i=1}^{10^6} V(l_i) = V$". The system 102 may load the value of the fractionally weighted data portfolios on the qudits/qubits as input, as represented, in expression (3), as follows:

$$\text{Fractionally weighted data portfolios}|input\rangle = \sum_l \sqrt{\frac{V(l)}{V}} \, |x_l\rangle_n |l\rangle_{\log(L)} \qquad (3)$$

where, "$x_l$" may be the current price of an asset "$l$";
"$V(l)$" may be the value of label of the asset;
"L" may be the collection of labels; and
"V" may be the total value of all assets.

In an exemplary embodiment, the prediction circuit of the QNN 108 may predict the price movement of the complete fractionally weighted data portfolios. In an embodiment, the QNN 108 may be utilized to determine similarities between labels of the of the multi-dataset 116A, and further determine labels of each dataset of the multi-dataset 116A through the ansatz architecture associated with the QNN 108.

Quantum computing holds a great promise for a variety of applications, which has fueled a quest to develop the necessary physical hardware. Quantum algorithms, for example, may factor numbers, simulate quantum systems, or solve linear systems of equations with an exponential speedup over classical methods. Due to the extremely high computational cost, applications such as simulating complex quantum systems or solving large-scale linear algebra problems may be extremely difficult for classical computers. Although fault-tolerant quantum computers may unlikely be available in the near future, quantum computers, especially gate-based quantum computers, do promise a solution. Current quantum devices have significant limitations, such as, a limited number of qubits and noise processes that limit circuit depth.

Hybrid quantum-classical algorithms, such as, Quantum Approximate Optimization Algorithm (QAOA), may be typically used for obtaining approximate solutions of combinatorial optimization problems, such as, graph-based optimizations. At each call to the quantum computer, a trial state may be prepared by applying a sequence of pairs of alternating quantum operators. The two alternating operators may be referred to as a phase operator (which encodes the objective function of the combinatorial optimization problem), and a mixing operator. The QAOA may have limitations, such as, complexities in integration of classical and quantum components and inefficiencies.

Further, ensuring stable and efficient training of Quantum Generative Adversarial Networks (QGANs) may be a significant challenge. The potential advantages of QGANs may include faster convergence rates and the ability to handle high-dimensional data more efficiently. Implementation and experimental results may show the effectiveness of QGANs, with significant improvements in learning and generating random distributions compared to classical GANs. The QGANs may be applied in fields, such as, finance, cryptography, machine learning, and recommendation of future research directions, including exploring different quantum architectures and improving the scalability of QGANs. Furthermore, resource requirements for the QGANs may be substantial.

Typically, the digital quantum computers may have quantum digital representations (qubits and qudits) that are similar to the role of bits and digits in modern classical computers. The digital quantum computers may include circuits that may be defined by running a collection of gates over a qubit register. Here, the gates may be defined as controlled electromagnetic pulse sequences. Further, the gates may be unitary transformations that change a state, such as, an amplitude or a phase of a quantum state. Further, the gates may be parameterized, and the pulses may be controlled by electric signals stored in a memory bank similar to working memory, cache, and RAM in classical computers. A major problem may arise from the limitations of classical control over digital quantum systems, leading to challenges in the training of parameters to control the system.

The present disclosure may address typical problems of QNN training by providing a solution to exploit quantum phenomenon in many-body systems for global information extraction to accelerate the learning process and improve optimality of parameters. The present disclosure proposes an optimization of quantum neural networks (QNNs) for multi-data learning and inference, for example, in the context of financial asset datasets. The present disclosure significantly may reduce the required quantum resources. While representing thousands of data types naively in parallel would require tens of thousands of qubits, the proposed method may only require hundreds of qubits. The proposed method may use only tens of qubits for each quantum representation of the data type and leverage shared neural network resources. The shared neural network resources may help the network generalize better from training to test datasets. The shared neural network may reduce overfitting and improve the model's performance on unseen data. Further, the disclosed method may be a pure quantum approach that requires fewer resources and provides better generalization. It may involve training quantum networks for quantum multi-data representations and deploying inference with quantum representations of multi-data collections, such as, those with fractional weighting. Herein, by introducing a label qubit and utilizing a universal and controlled repeated ansatz circuit structure, the disclosed method may enable efficient training of a unified quantum network for multiple datasets with a limited overhead. The proposed method may perform inference for fractionally weighted data portfolios or inputs composed of multiple label types jointly. The proposed model may represent thousands of data types with tens of qubits for each data type representation, resulting in a total of hundreds of qubits. This is due to the logarithmic scaling with type, which is more efficient compared to existing joint learning methods that would require tens of thousands of qubits.

The circuit design may be a repeated universal and ancilla-controlled ansatz architecture for multi-task learning, designed to facilitate shared and typespecific quantum representations for collections of data. Data may be labeled, and training may occur with labelled data jointly, facilitating multi-data learning. The proposed method may show improved results on test datasets, similar to the motivation for multi-task learning in the classical setting.

The present disclosure may provide multi-data representations that are prevalent across various application domains, and the QNNs may offer distinct advantages over traditional neural networks, particularly for inference over fractionally weighted sets of mixed label inputs due to quantum superposition. This unique capability of the QNNs may enable more efficient and effective processing of complex data sets, making the QNNs highly valuable in fields that require handling diverse and high-dimensional data.

In portfolio analysis modeling, the QNNs can effectively manage portfolios, which consist of various types of assets. In pharmaceutical drug discovery, multi-data representations may enable the prediction and understanding of different compounds through shared representations. Additionally, the QNNs may facilitate real-time routing and logistics by processing different data types in parallel, and they can handle high-dimensional, diverse feature types in genomic analysis, allowing for efficient loading and analysis of large genomic datasets at inference time. Overall, the QNNs may provide significant value in such fields by leveraging quantum superposition for more efficient multi-data representation and inference.

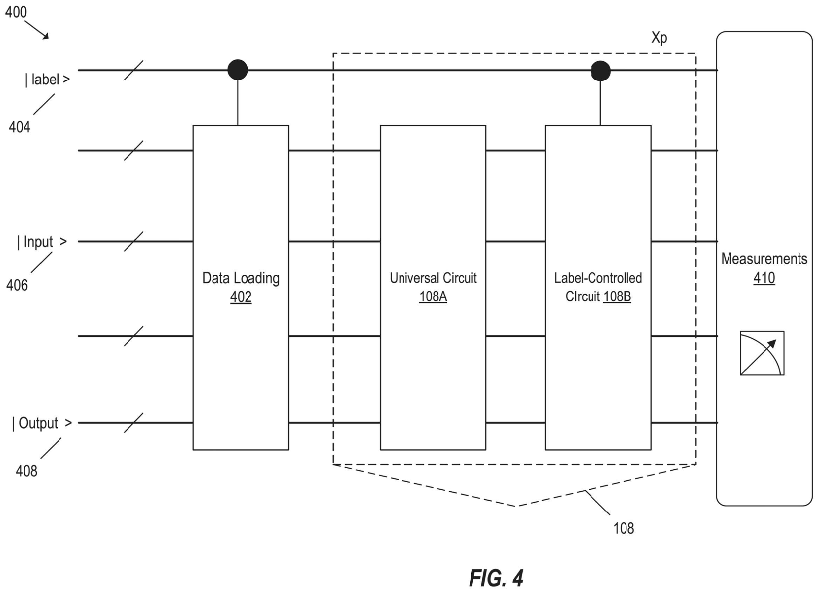

FIG. 4 is a diagram that illustrates exemplary circuit implementation for a universal circuit and a label-controlled circuit ansatz for QNNs, in accordance with an embodiment of the disclosure. FIG. 4 is explained in conjunction with elements from FIG. 1, FIG. 2, and FIG. 3. With reference to FIG. 4, there is shown a block diagram 400 that illustrates an exemplary circuit (for training of and inference from quantum generative networks) and its operations, as described herein. The exemplary operations illustrated in the block diagram 400 may be performed by any device, apparatus, or computing system, such as by the system 102 of FIG. 1. The block diagram 400 includes an operation for data loading 402, label qubits 404 (e.g., "|label>"), input qubits 406 (e.g., "|input>"), output qubits 408 (e.g., "|output>"), the universal circuit 108A, the label-controlled circuit 108B, and measurements 410 (also, referred herein as a measurement device).

Typically, the measurement device 410 may correspond to a system used for measuring a quantum system that may be treated as a quantum mechanical system. The measurement device 410 may interact with a quantum system (such as, the quantum computer 104) under study, and the measurement process may be understood as the quantum evolution of the combined system of the measurement device 410 and the quantum computer 104. The interaction between the measurement device 410 and the quantum computer 104 may lead to collapse of the wavefunction, reflecting the outcome of the measurement. The measurement device 410 may be a pointer on a dial or the conditional emission of a light pulse, and the measurement device 410 may be designed to yield a numerical result from the quantum computer 104 being measured.

The system 102 may include a share-and-specialize ansatz architecture to facilitate multi-task learning for the QNN 108 to generate predictions associated with the loaded fractionally weighted data portfolios. Herein, the ansatz architecture may be designed such that a share representation of ansatz architecture may be followed by a label specialized representation is repeated, and the shared representation may be universal to the input qubits 406, the output qubits 408 and qubits without the knowledge of the label qubits 404 to specify the data type of the input qubits 406. Further, the specialized representation of the ansatz architecture may be controlled by the value (or sub-value) of the label qubits 404, hence specializing the parameters to the label qubits 404 or properties of the label qubits 404.

In an embodiment, the system 102 may initialize the parameterized quantum circuit 106 on the quantum computer 104 and further receive input data that includes the quantum representation of the multi-dataset 116A and the initial state (such as, the input qubits 406) of the QNN 108, and labels (such as, the label qubits 404). The label qubits 404 may be applied as control inputs to the label-controlled circuit 108B. Next, the system 102 may apply the data loading 402 on the input qubits 406 and the label qubits 404. For example, the data loading 402 may be a distribution loading through Quantum Born Machine, a feature loading, a Quantum Boltzmann Machine, a ZZ feature map, an amplitude loading, a Grover-Rudolph circuit, and the likes. Further, the data loading 402 may be associated with the QNN 108.

In an embodiment, the QNN 108 may include a combination of the label-controlled circuit 108B and the universal circuit 108A. Further, the system 102 may apply the QNN 108 repeatedly over the input qubits 406 to generate a prediction circuit. For example, the QNN 108 may be repeated "p" times in sequence on the input qubit registers 406 to generate the prediction circuit that may be associated with prediction associated with the loaded fractionally weighted data portfolios. Further, when the QNN 108 is repeated "p" times, then the universal circuit 108A may be "$U(\theta^i)$", where $\theta^i$ may be ($\theta^1$, ...., $\theta^p$), and the label-controlled circuit 108B may be "$V(\omega^i)$", where $\omega^i$ may be ($\omega^1$, ...., $\omega^p$). The prediction of the prediction circuit may be rendered and observed on the measurement device 410.

Next, the system 102 may load the quantum representation of the input qubit 406 on the QNN 108 and label the first dataset of the input qubit 406, based on the label qubit 404 associated with the input qubit 406. Here, the labelled first dataset may be represented by labelled qubits on the parameterized quantum circuit 106. Further, the system 102 may determine the label-controlled circuit 108B associated with label-controlled input qubits and the universal circuit 108A associated with the ansatz architecture for determining the prediction circuit. Herein, the prediction circuit may be the combination of the label-controlled circuit 108B and the universal circuit 108A. Furter, the system 102 may train the prediction circuit based on the labelled first dataset and the initial state associated with the QNN 108 and load the fractionally weighted data portfolios on the labelled qubits and the label-controlled input qubits, wherein the trained prediction circuit may be configured to generate predictions associated with the loaded fractionally weighted data portfolios.

It should be noted that the circuit of the block diagram 400 of FIG. 4 is for exemplary purposes and should not be construed to limit the scope of the disclosure.

FIG. 5 is a diagram that illustrates exemplary circuit for sequence generation for portfolios with a trained QNN, according to at least one embodiment of the disclosure. FIG. 5 is explained in conjunction with elements from FIG. 1, FIG. 2, FIG. 3, and FIG. 4. With reference to FIG. 5, there is shown a block diagram 500 that illustrates an exemplary circuit (for sequence generation for portfolios with a trained QNN, for example, the QNN 108) and its operations, as described herein. The exemplary operations illustrated in the block diagram 500 may be performed by any device, apparatus, or computing system, such as by the system 102 of FIG. 1.

The block diagram 500 may include a QNN 502a, a QNN 502b, a QNN 502c, a QNN 502d, the measurements 504, a loaded input 506, and an output 508. As the term used herein, the measurements 504 (also referred as the measurement device 504) may be similar to the measurement device 410, hence the details associated with the measurement device 504 is omitted for the sake of brevity.

Upon the training the prediction circuit based on the labelled first dataset and the initial state associated with the QNN 108, the system 102 may deploy the QNN 108 with trained prediction circuit for inference of the fractionally weighted data portfolios. For example, the QNN 108 may be sequentially generated (in superposition) over the fractionally weighted data portfolios (such as a financial portfolio) over multi-dataset 116A at an inference stage. The sequentially generated QNN may be a QNN 502a, a QNN 502b, a QNN 502c, and a QNN 502d. Where, the QNN 502a, the QNN 502b, the QNN 502c, and the QNN 502d each may be represented by $G(\theta, \omega)$.

At inference, each label (such as the label qubits 404 in FIG. 4) may be associated with the loaded input 506 for example, "$|l\rangle|x_1^l, \dots, x_k^l\rangle$", with "$l$" as the label and "$x_1^l, \dots, x_k^l$" as the associated input (known as context in sequence generation). Then, the wavefunction may be defined with amplitudes "$\sqrt{\dfrac{V_l}{V}}$" over each label, where $V = \sum_{l=1}^{L} V_l$.

Further, the sequences may be generated by applying the QNN 108 over the entire fractionally weighted data portfolios repeatedly (thus the sequentially generated may be referred to as, the QNN 502a, the QNN 502b, the QNN 502c, and the QNN 502d).

Referring to the FIG.5, the loaded input 506 for the sequentially generated QNN 502 may be represented as expression (4), as follows:

$$\sum_{l} \sqrt{\frac{V_l}{V}} \, |l\rangle_{\log(L)} \, |x_1^l, \dots, x_k^l\rangle_{1,\dots K} \qquad\qquad (4)$$

and the output 508 of the sequentially generated QNN may initially be in superposition of $|0\rangle$ and may be represented as expression (5), as follows:

$$|0\rangle_{1,\dots r} \qquad\qquad\qquad (5)$$

Further, the output 508 may be rendered based on the application of the sequentially generated QNN 502 on the loaded input 506 and may be observed on the measurement device 504. It should be noted that the block diagram 500 of FIG. 5 is for exemplary purposes and should not be construed to limit the scope of the disclosure.

FIGs. 6A-6B are diagrams that illustrate exemplary circuit for label control augmentation, according to at least one embodiment of the disclosure. FIGs. 6A-6B are explained in conjunction with elements from FIG. 1, FIG. 2, FIG. 3, FIG. 4, and FIG. 5. With reference to FIGs. 6A-6B, there are shown circuits 600A and 600B, respectively, of the system 102. The exemplary operations related to the block diagrams of circuits 600A and 600B may be performed by any device, apparatus, or computing system, such as, by the system 102 of FIG. 1.

Typically, augmentation in quantum relates to the process of enhancing or modifying quantum data or quantum computers to improve performance or capabilities. For example, the augmentation in quantum may involve techniques such as quantum-inspired image augmentation, where classical images may be processed using principles from quantum mechanics, or the application of quantum data analysis methods to enhance the training datasets for the quantum computers learning models. The goal of augmentation is to leverage quantum properties and operations to achieve better results in various applications, such as image classification, optical communication, and the likes.

As used herein, the term "R-Gate" refers to rotation gate that may be used for controlling the flow of information between qubits. The R-Gate may be a single-qubit gate that performs rotations on the qubit's state vector. The rotation may be used to control the flow of information between qubits. Additionally, the R-Gates may also be used to perform phase shifts in the qubit's state, that may be used for logic operations on qubits. Further, the R-Gate is a two-parameter gate that may be used for performing a variety of operations on qubits, such as the NOT operation.

Referring to Fig. 6A, the circuit 600A includes an R-Gate 602a, an R-Gate 604a, and an R-Gate 606a. Further, the circuit 600A includes two input / output lines. The input lines may be in state $|0\rangle$. Each of the R-Gate 602a, the R-Gate 604a, and the R-Gate 606a may be represented as "R($\theta_1$)", "R($\theta_2$)", and "R($\theta_3$)" respectively. Where, $\theta_1$, $\theta_2$, and $\theta_3$ may be the rotation associated with each of the R-Gate. Furthermore, in an example the circuit 600A may be a controlled circuit.

In context of the present disclosure, an X-Gate may be a fundamental quantum gate in quantum computing that may operate on a single qubit and may be primarily used to flip the state of the qubit. Here, the X-Gate may be used to perform a bit-flip operation, for example, when applied to a qubit in the state "$|0\rangle$", the qubit state may be transformed to "$|1\rangle$". Conversely, when applied to a qubit in the sate "$|1\rangle$", the qubit state may be changed to "$|0\rangle$". Further in an example, the operation may be mathematically represented using a matrix form of the conventional X-Gate.

Referring to Fig. 6B, the circuit 600B may include label controls (such as, a label 1 control 616a, a label 2 control 616b, a label 3 control 616c, and a label 4 control 616d), X-Gates (such as an X 608, an X 610, an X 612, and an X 614), controlled circuits (such as a controlled circuit 618a, a controlled circuit 618b, a controlled circuit 618c, and a controlled circuit 618d, i.e., similar to the circuit 600A) and input / output lines that may be in at least one of a state (such as $|0\rangle$, $|1\rangle$, or any other quantum state).

In an embodiment, the label controls may be configured to control the controlled circuits, as shown in the FIG. 6B. Further, the input / output lines of the label controls may be configured to control the X-Gates, as shown in FIG. 6B. Further, a combination of each of the label controls and each of the controlled circuits may be associated with the prediction circuit of the QNN 108. For example, the combination of the label 1 control 616a and the controlled circuit 618a may correspond to the QNN 108. Here, the system 102 may apply the QNN 108 repeatedly over the fractionally weighted data portfolios to generate the prediction circuit.

In an exemplary embodiment, a quantum gate of the quantum gates 110 or a combination of the quantum gates 110 may be augmented for the qubit or the qudit control. The label wires may augment any ansatz architecture circuit to be controlled by the label. Further, the system 102 may use X-gates to change the control setting from the logical one state to the logical zero state (on the quantum computer 104). Furthermore, the label control may also be partial, giving less control but requiring fewer repetitions of controlled circuitry and lower locality control.

For example, the augmentation of the qubit (or qudit registry) may be associated with addition of log(L) qubits. At initial state, the input may be $x_l$ with label $l$, then the initial state may be represented as expression (6), as follows:

$$|l\rangle_{\log(L)}|x_l\rangle_n \qquad\qquad (6)$$

and the for the trained QNN 108 may be represented as expression (7), as follows:

$$G(\theta)|x_l\rangle_n|l\rangle_{\log(L)} = |l\rangle_{\log(L)}|\psi(x_l)\rangle_n \qquad\qquad (7)$$

where $G(\theta)$ may be the QNN 108;
$x_l$ may be the input with label $l$ associated with the input;
$|l\rangle_{\log(L)}$ may be the label from the collection L; and
$|\psi(x_l)\rangle_n$ may be the generated state.

Herte, the QNN 108 may be structured based on share-and-specify ansatz architecture, where the QNN 109 may be the collection of quantum gates 110 (specific pulse structures on the device) with classical control parameters that may be stored in the memory 204b. It should be noted that the circuits 600A and 600B of FIG. 6A and FIG. 6B, respectively, are for exemplary purposes and should not be construed to limit the scope of the disclosure.

FIGs. 7A-7F are schematic diagrams of layered circuit structures for the QNN, according to at least one embodiment of the disclosure. FIGs. 7A-7F are explained in conjunction with elements from FIG. 1, FIG. 2, FIG. 3, FIG. 4, FIG. 5, FIG. 6A, and FIG. 6B. With reference to FIGs. 7A-7F, there are shown block diagrams 700A, 700B, 700C, 700D, 700E, and 700F, respectively, of exemplary layered circuit structures for the QNN 108. FIGs. 7A-7F illustrate multiple parameterized quantum circuits that may be used for developing the QNN 108 including some non-exhaustive layer constructions over few qubits such that (neural networks) NNs layers may be placed after one another to define a full circuit.

In context of the present disclosure, a Rz-Gate may also be a single-qubit quantum gate used in quantum computing, for performing rotations around the Z-axis of the Bloch sphere. The Rz-Gate may be used for manipulating qubit states that are represented mathematically by a unitary matrix. Further, a Rx-Gate may also be a single-qubit quantum gate used in quantum computing, for performing rotations around the X-axis of the Bloch sphere. The Rx-Gate may be used for manipulating qubit states that are represented mathematically by a unitary matrix.

Referring to FIG. 7A in 700A, the NNs layer that is represented may be Quantum Approximate Optimization Algorithm (QAOA)-like layer. The circuit in FIG. 7A includes a Rz-Gate 702a including a first rotation, a Rz-Gate 704a including a second rotation, a Rz-Gate 706a including a third rotation, a Rx-Gate 708a including a fourth rotation, a Rx-Gate 710a including a fifth rotation, and a Rx-Gate 712a including a sixth rotation. Further, the circuit in FIG. 7A may include three input / output lines. The input / output lines may be in a state (such as, "$|0\rangle$" or "$|1\rangle$"), as shown at 714a, 716a, and 718a in FIG.7A. Furthermore, each of the Rz-Gate may be connected to an X-Gate at the input and the output side of the Rz-Gate. The X-Gate may be represented as a cross on the input and the output side of each of the Rz-Gates. For example, the cross shown at 720a-730a in FIG. 7A.

In an embodiment, the rotation associated with the quantum gates 110 may be $\theta_{ji}$, where $\theta_{ji}$ may represent a first rotation to an nth rotation, and $i$ may be "1" to "p", where "p" is an integer. Thus, for example, the Rz-Gate 702a may include a $\theta_{j1}$ rotation, and further may be represented as Rz($\theta_{j1}$). Similarly, the Rz-Gate 704a, the Rz-Gate 706a, the Rx-gate 708a, the Rx-Gate 710a, and the Rx-Gate 712a may be represented as Rz($\theta_{j2}$), Rz($\theta_{j3}$), Rx($\theta_{j4}$), Rx($\theta_{j5}$), and Rx($\theta_{j6}$), respectively.

For an exemplary embodiment, the QAOA-like layer may be a framework that enables efficient solutions to complex optimization problems by harnessing quantum parallelism and classical optimization strategies. The QAOA may consist of alternating layers of quantum operations, that may be referred to as QAOA-like layers.

In context of the present disclosure, an X-Gate may be a fundamental quantum gate in quantum computing that may operate on a single qubit and may be primarily used to flip the state of that qubit. Here, X-Gate may be used to performs a bit-flip operation, for example, when applied to a qubit in the state "$|0\rangle$", the qubit state may be transformed to "$|1\rangle$". Conversely, when applied to a qubit in the state "$|1\rangle$", the qubit state may be changed to "$|0\rangle$". Further in an example, the operation may be mathematically represented using a matrix form of the conventional X-Gate.

Referring to FIG. 7B in 700B, the NNs layer that is represented may be a pooling layer. The circuit in FIG. 7B includes a Rz-Gate 702b including a first rotation, a Rz-Gate 704b including a second rotation, a Ry-Gate 706b including a third rotation, and a Ry-Gate 708b including a fourth rotation. Further, the circuit in FIG. 7B may include two input / output lines. The two input / output lines may be in a state (such as, "$|0\rangle$" or "$|1\rangle$"), as shown at 710b and 712b, respectively, in FIG.7B. Furthermore, the Rz-Gate 704b may be connected to an X-Gate 714b at the input side, and the Ry-Gate 708b may be connected to an X-Gate 716b at the input side. In an embodiment, the first rotation may be negative of "$\frac{\pi}{2}$".

For an exemplary embodiment, the pooling layer may be a component of quantum convolution neural networks (QCNNs) that may leverage quantum properties to efficiently manage and reduce data complexity while retaining significant information necessary for accurate computations. The pooling layer may harness the quantum computing's unique capabilities to enhance machine learning processes.

Referring to FIG. 7C in 700C, the NNs layer that is represented may be a convolution layer. The circuit in FIG. 7C includes an Rz-Gate 702c including a first rotation, a Rz-Gate 704c including a second rotation, a Ry-Gate 706c including a third rotation, a Ry-Gate 708c including a fourth rotation, and a Rz-Gate 710c including a fifth rotation. Further, the circuit in FIG. 7C includes two input / output lines. The input / output lines may be in a state (such as, '$|0\rangle$'" or "$|1\rangle$"), as shown at 712c and 714c in FIG.7C. Furthermore, the Rz-Gate 704c may be connected to an X-Gate 716c at the input side, the Ry-Gate 708c may be connected to an X-Gate 718c at the input side, and the Rz-Gate 710c may be connected to an X-Gate 720c at the input side. In an embodiment, the first rotation may be negative of "$\frac{\pi}{2}$", and the fifth rotation may be "$\frac{\cdot\pi}{2}$".

For an exemplary embodiment, the convolution layer may leverage the unique properties of quantum mechanics, such as superposition and entanglement, to enhance feature extraction from data. The convolution layer in a QCNN may be designed to extract features from the quantum states. The convolution layer may operate by applying a series of parameterized quantum gates (such as, rotation and controlled-NOT (CNOT) gates) to qubits, that may encode the input data. The operation performed may allow any network to identify patterns and relationships within the data more effectively than classical methods.

Referring to FIG. 7D in 700D, the NNs layer that is represented may be a real amplitude layer. The circuit in FIG. 7D includes an Ry-Gate 702d including a first rotation, a Ry-Gate 704d including a second rotation, a Ry-Gate 706d including a third rotation. Further, the circuit in FIG. 7D may include an X-Gate 708d connected to the output of the Ry-Gate 704d, an X-Gate 710d connected to the output of the Ry-Gate 706d, and an X-Gate 712d may be connected to the output of the Ry-Gate 702d. Further, the circuit in FIG. 7D includes three input / output lines. The input / output lines may be in a state (such as "$|0\rangle$" or "$|1\rangle$"), as shown at 714d, 716d and 718d, respectively, in FIG.7D.

For an exemplary embodiment, the real amplitude layer may be a framework where quantum states may be represented using real numbers rather than complex numbers. The real amplitude layer may be relevant for the quantum computer 104 and data encoding, herein amplitudes play a crucial role in determining the behavior and outcomes of the system 102.

Referring to FIG. 7E in 700E, the NNs layer that is represented may be a quantum neuron layer. The circuit in FIG. 7E includes an R-Gate 702e including a first rotation, a Y-Gate 704e including a second rotation, an R-Gate 706e including a third rotation, and a joint quantum measurement device 714e. Further, the circuit in FIG. 7E includes three input / output lines. The input / output lines may be in a state (such as, "$|0\rangle$" or "$|1\rangle$"), as shown at 708e, 710e, and 712e, respectively, in FIG.7E. Furthermore, the input side of the Y-Gate 704e may be connected to the output of the R-Gate 702e, the input side of R-Gate 706e may be connected to the output of the R-Gate 702e. In an embodiment, the third rotation may be negative the first rotation.

For an exemplary embodiment, the quantum neuron layer may include a quantum perceptron, an analogous to classical perceptron's that may be used in traditional NNs. The quantum perceptron operates on qubits (quantum bits) and may be represented as an arbitrary unitary operator that processes input qubits to produce output qubits. The number of input and output qubits may vary, allowing for flexible architectures in the quantum neural networks layer.

Referring to FIG. 7F in 700F, the NNs layer that is represented may be an efficient SU2 layer. The circuit in FIG. 7F includes an Ry-Gate 702f including a first rotation, a Ry-Gate 704f including a second rotation, a Ry-Gate 706f including a third rotation, an Rz-Gate 708f including a fourth rotation, a Rz-Gate 710f including a fifth rotation, and a Rz-Gate 712f including a sixth rotation. Further, the Ry-Gate 702f may be sequentially connected to the Rz-Gate 708f, the Ry-Gate 704f may be sequentially connected to the Rz-Gate 710f, and the Ry-Gate 706f may be sequentially connected to the Rz-Gate 712f. Furthermore, an X-Gate 714f may be connected to the output of the Rz-Gate 710f, an X-Gate 716f may be connected to the output of the Rz-Gate 712f, and an X-Gate 718f may be connected to the output of the Rz-Gate 708f. Further, the circuit in FIG. 7F may include three input / output lines. The input / output lines may be in a state (such as "$|0\rangle$" or "$|1\rangle$"), as shown at 720f, 722f, and 724f, respectively, in FIG.7F.

For an exemplary embodiment, the efficient SU2 layer may be designed to implement a 2-local circuit that may consists of single-qubit operations and entanglements, that makes the circuit suitable for preparing trial wave functions in the quantum computer 104. As used herein the term "SU(2)" refers to the special unitary group of degree 2, that may consist of unitary matrices with a determinant of 1. The matrices may represent quantum gates such as Pauli rotations, crucial for manipulating qubits in the quantum computer 104. Further, the efficient SU2 layer may provide a flexible and resource-efficient way to construct the quantum computer 104 that leverages the capabilities of quantum mechanics.

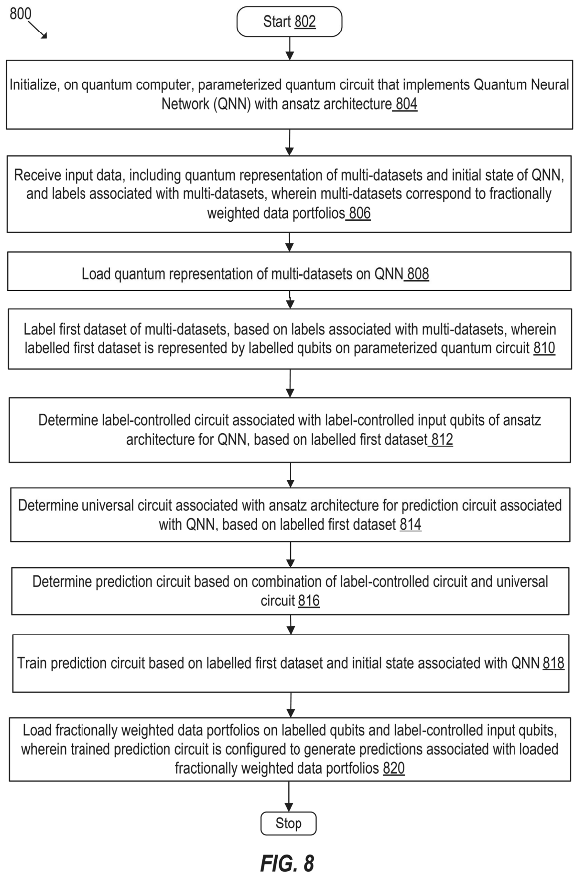

FIG. 8 is a flowchart of an example method for multi-data quantum generative network learning and inference, arranged in accordance with at least one embodiment described in the present disclosure. FIG. 8 is explained in conjunction with elements from FIG. 1, FIG. 2, FIG. 3, FIG. 4, FIG. 5, FIGs. 6A-6B, and FIGs. 7A-7F. With reference to FIG. 8, there is shown a flowchart 800 of an example method for multi-data quantum generative network learning and inference. The example method illustrated in the flowchart 800 may be performed by any suitable system, apparatus, or device, such as, by the system 102 of FIG. 1. The flowchart 800 may start at 802 and proceed to 804.

At 804, the parameterized quantum circuit 106 may be initialized on the quantum computer 104. The system 102 may initialize, on the quantum computer 104, the parameterized quantum circuit 106 that implements the QNN 108 with an ansatz architecture. In accordance with an embodiment, the QNN 108 may be implemented to generate predictions associated with the loaded fractionally weighted data portfolios. In accordance with an embodiment, the multi-datasets may correspond to fractionally weighted data portfolios. Details related to the system, the quantum computer and the parameterized quantum circuits are mentioned further, for example, in FIG. 1 and FIG. 3.

At 806, input data may be received. The system 102 may receive input data, that includes a quantum representation of the multi-dataset 116A and an initial state of the QNN, and labels associated with the multi-datasets 116A. Further, the multi-dataset 116A associated with the database 116 may correspond to fractionally weighted data portfolios. Details related to the multi-dataset of the database are mentioned further, for example, in FIG. 1 and FIG. 3.

At 808, the multi-datasets may be loaded. The system 102 may load the quantum representation of the multi-dataset 116A on the QNN 108. Details related to the loading of the multi-dataset are described further, for example, in FIG. 1 and FIG. 3.

At 810, a first dataset may be labelled. The system 102 may label the first dataset of the multi-dataset 116A, based on the labels associated with the multi-dataset 116A. Further, in an embodiment, the labelled first dataset may be represented by labelled qubits on the parameterized quantum circuit 106. Details related to the labelling of the first dataset are described further, for example, in FIG. 1 and FIG. 3.

At 812, the label-controlled circuit 108B may be determined. The system 102 may determine the label-controlled circuit 108B associated with label-controlled input qubits of the ansatz architecture for the QNN 108, based on the labelled first dataset. Details related to the label-controlled circuit and the QNN are mentioned, further, for example, in FIG. 1 and FIG. 3.

At 814, the universal circuit 108A may be determined. The system 102 may determine the universal circuit 108A associated with the ansatz architecture for a prediction circuit associated with the QNN 108, based on the labelled first dataset. Details related to the universal circuit and the QNN are described further, for example, in FIG. 1 and FIG. 3.

At 816, a prediction circuit may be determined. The system 102 may determine the prediction circuit based on a combination of the label-controlled circuit 108B and the universal circuit 108A. The determination of the prediction circuit is described further, for example, in FIG. 1 and FIG. 3.

At 818, the prediction circuit may be trained. The system 102 may train the prediction circuit based on the labelled first dataset and the initial state associated with the QNN 108. The training of the prediction circuit is described further, for example, in FIG. 1 and FIG. 3.

At 820, the fractionally weighted data portfolios may be loaded. The system 102 may load the fractionally weighted data portfolios on the labelled qubits and the label-controlled input qubits. Further, the trained prediction circuit may be configured to generate predictions associated with the loaded fractionally weighted data portfolios. The loading of the fractionally weighted data portfolios is described further, for example, in FIG. 1 and FIG. 3. Control may pass to end.

Although the flowchart 800 is illustrated as discrete operations, such as 802, 804, 806, 808, 810, 812, 814, 816, 818, and 820; however, in certain embodiments, such discrete operations may be further divided into additional operations, combined into fewer operations, or eliminated, depending on the particular implementation.

Various embodiments of the disclosure may provide a (optionally non-transitory) computer-readable storage medium configured to store instructions that, in response to being executed, causes a system (such as the system 102) to perform operations that include initializing, on a quantum computer, a parameterized quantum circuit that implements a QNN with an ansatz architecture. The operations further include receiving input data, including a quantum representation of a multi-datasets and an initial state of the QNN, and labels associated with the multi-datasets. The multi-datasets correspond to fractionally weighted data portfolios. The operations further include loading the quantum representation of the multi-datasets on the QNN. The operations further include labelling a first dataset of the multi-datasets, based on the labels associated with the multi-datasets. The labelled first dataset is represented by labelled qubits on the parameterized quantum circuit. The operations further include determining a label-controlled circuit associated with label-controlled input qubits of the ansatz architecture for the QNN, based on the labelled first dataset. The operations further include determining a universal circuit associated with the ansatz architecture for a prediction circuit associated with the QNN, based on the labelled first dataset. The operations further include determining the prediction circuit based on a combination of the label-controlled circuit and the universal circuit. The operations further include training the prediction circuit based on the labelled first dataset and the initial state associated with the QNN. The operations further include loading the fractionally weighted data portfolios on the labelled qubits and the label-controlled input qubits. The trained prediction circuit may be configured to generate predictions associated with the loaded fractionally weighted data portfolios.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

In any of the above aspects, the various features may be implemented in hardware, or as software modules running on one or more processors/computers.

The present disclosure also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program may be stored on a non-transitory computer-readable medium, or it could, for example, be in the form of a signal such as a downloadable data signal provided from an Internet website, or it could be in any other form.

**Claims**

1. A method, executed by a processor, the method comprising:

   initializing, on a quantum computer, a parameterized quantum circuit that implements a Quantum Neural Network (QNN) with an ansatz architecture;
   receiving input data, including a quantum representation of a multi-datasets and an initial state of the QNN, and labels associated with the multi-datasets, wherein the multi-datasets correspond to fractionally weighted data portfolios;
   loading the quantum representation of the multi-datasets on the QNN;
   labelling a first dataset of the multi-datasets, based on the labels associated with the multi-datasets, wherein the labelled first dataset is represented by labelled qubits on the parameterized quantum circuit;
   determining a label-controlled circuit associated with label-controlled input qubits of the ansatz architecture for the QNN, based on the labelled first dataset;

determining a universal circuit associated with the ansatz architecture for a prediction circuit associated with the QNN, based on the labelled first dataset;

determining the prediction circuit based on a combination of the label-controlled circuit and the universal circuit;

training the prediction circuit based on the labelled first dataset and the initial state associated with the QNN; and

loading the fractionally weighted data portfolios on the labelled qubits and the label-controlled input qubits, wherein the trained prediction circuit is configured to generate predictions associated with the loaded fractionally weighted data portfolios.

2. The method according to claim 1, wherein the ansatz architecture is a share-and-specify ansatz architecture.

3. The method according to any of the preceding claims, further comprising selecting the first dataset from the multi-datasets to label the first dataset.

4. The method according to any of the preceding claims, wherein each of the label-controlled circuit and the universal circuit comprises a sequence of layers,
and optionally wherein:

each layer of the sequence of layers includes a quantum gate with stored control parameters; and/or

each layer of the sequence of layers includes a first quantum gate and a control quantum gate configured to control the first quantum gate; and/or

each quantum gate in the sequence of layers is augmented for qubits or qudit control; and/or

each layer of the sequence of layers corresponds to at least one of a Quantum Alternating Operator Ansatz (QAOA)-layer, a Quantum Annealing (QA)-layer, a pooling layer, a conventional layer, an efficient special unitary group of degree 2 (SU2)-layer, a real amplitudes layer, or a quantum neuron layer; and/or

each first layer of the sequence of layers is different from layers, of the sequence of layers, other than the first layer.

5. The method according to any of the preceding claims, wherein the label-controlled circuit is associated with a specialized representation based on control parameters to label the input data.

6. The method according to any of the preceding claims, wherein the universal circuit is associated with a shared representation for the input data, output data, and intermediary qubits.

7. The method according to any of the preceding claims, further comprising applying the QNN repeatedly over the fractionally weighted data portfolios to generate the prediction circuit.

8. The method according to any of the preceding claims, further comprising deploying the QNN for inference of the fractionally weighted data portfolios.

9. The method according to any of the preceding claims, wherein the QNN corresponds to at least one of a Quantum Born Machine, a Quantum Boltzmann Machine, a ZZ feature map, an amplitude loading circuit, or a Grover-Rudolph circuit.

10. The method according to any of the preceding claims, wherein the quantum hardware corresponds to at least one of: quantum processors, digital quantum computers, quantum computers based on microwave-pulses acting on superconducting devices, or quantum computers based on laser pulses acting on ion-trap devices.

11. A non-transitory computer-readable storage medium configured to store
instructions that, in response to being executed, causes a system to perform operations, the operations comprising:

initializing, on a quantum computer, a parameterized quantum circuit that implements a Quantum Neural Network (QNN) with an ansatz architecture;

receiving input data, including a quantum representation of a multi-datasets and an initial state of the QNN, and labels associated with the multi-datasets, wherein the multi-datasets correspond to fractionally weighted data portfolios;

loading the quantum representation of the multi-datasets on the QNN;

labelling a first dataset of the multi-datasets, based on the labels associated with the multi-datasets, wherein the labelled first dataset is represented by labelled qubits on the parameterized quantum circuit;

determining a label-controlled circuit associated with label-controlled input qubits of the ansatz architecture for the QNN, based on the labelled first dataset;
determining a universal circuit associated with the ansatz architecture for a prediction circuit associated with the QNN, based on the labelled first dataset;
determining the prediction circuit based on a combination of the label-controlled circuit and the universal circuit;
training the prediction circuit based on the labelled first dataset and the initial state associated with the QNN; and
loading the fractionally weighted data portfolios on the labelled qubits and the label-controlled input qubits, wherein the trained prediction circuit is configured to generate predictions associated with the loaded fractionally weighted data portfolios.

12. The non-transitory computer-readable storage medium according to claim 11, wherein each of the label-controlled circuit and the universal circuit comprises a sequence of layers.

13. The non-transitory computer-readable storage medium according to claim 11 or claim 12, further comprising applying the QNN repeatedly over the fractionally weighted data portfolios to generate the prediction circuit.

14. The non-transitory computer-readable storage medium according to any of claims 11 to 13, further comprising deploying the QNN for inference of the fractionally weighted data portfolios.

15. An electronic device, comprising:

a memory configured to store instructions; and
a processor, coupled to the memory, configured to execute the instructions to perform a process comprising:

initializing, on a quantum computer, a parameterized quantum circuit that implements a Quantum Neural Network (QNN) with an ansatz architecture;
receiving input data, including a quantum representation of a multi-datasets and an initial state of the QNN, and labels associated with the multi-datasets, wherein the multi-datasets correspond to fractionally weighted data portfolios;
loading the quantum representation of the multi-datasets on the QNN;
labelling a first dataset of the multi-datasets, based on the labels associated with the multi-datasets, wherein the labelled first dataset is represented by labelled qubits on the parameterized quantum circuit;
determining a label-controlled circuit associated with label-controlled input qubits of the ansatz architecture for the QNN, based on the labelled first dataset;
determining a universal circuit associated with the ansatz architecture for a prediction circuit associated with the QNN, based on the labelled first dataset;
determining the prediction circuit based on a combination of the label-controlled circuit and the universal circuit;
training the prediction circuit based on the labelled first dataset and the initial state associated with the QNN; and
loading the fractionally weighted data portfolios on the labelled qubits and the label-controlled input qubits, wherein the trained prediction circuit is configured to generate predictions associated with the loaded fractionally weighted data portfolios.

**FIG. 1**

200

System 102

Quantum Computer 104

Parameterized Quantum Circuit 106

Quantum Neural Network (QNN) 108

Universal
Circuit 108A

Label-
Controlled
Circuit 108B

Quantum Gates 110

Quantum Compiler
202a

Quantum Processor
202b

Electronic Device 112

Processor 204a

Memory 204b

Display Device 204d

Persistent Data
Storage 204c

FIG. 2

300

| Select first dataset from multi-dataset to label first dataset 302 |

↓

| Label first dataset of multi-dataset, based on labels associated with multi-dataset, wherein labelled first dataset is represented by labelled qubits on parameterized quantum circuit 304 |

↓

| Determine label-controlled circuit associated with label-controlled input qubits of ansatz architecture for QNN, based on labelled first dataset 306 |

↓

| Determine universal circuit associated with ansatz architecture for prediction circuit associated with QNN, based on labelled first dataset 308 |

↓

| Train prediction circuit based on labelled first dataset and initial state associated with QNN 310 |

↓

| Load fractionally weighted data portfolios on labelled qubits and label-controlled input qubits, wherein trained prediction circuit is configured to generate predictions associated with loaded fractionally weighted data portfolios 312 |

↓

| Deploy QNN for inference of fractionally weighted data portfolios 314 |

*FIG. 3*

FIG. 4

EP 4 787 229 A1

$$\Sigma_l \sqrt[2]{\frac{v_l}{v}} \, |\, l >$$

$$|\, (x_1^l, \dots, x_k^l) >_{1,\dots,k}$$

506

$$|\, 0 >_{1,..r}$$

508

502a

502b

502c

502d

Measurements
504

500

**FIG. 5**

*FIG. 6A*

*FIG. 6B*

EP 4 787 229 A1

FIG. 7A

FIG. 7B

FIG. 7C

FIG. 7D

**FIG. 7E**

**FIG. 7F**

800

Start 802

Initialize, on quantum computer, parameterized quantum circuit that implements Quantum Neural Network (QNN) with ansatz architecture 804

Receive input data, including quantum representation of multi-datasets and initial state of QNN, and labels associated with multi-datasets, wherein multi-datasets correspond to fractionally weighted data portfolios 806

Load quantum representation of multi-datasets on QNN 808

Label first dataset of multi-datasets, based on labels associated with multi-datasets, wherein labelled first dataset is represented by labelled qubits on parameterized quantum circuit 810

Determine label-controlled circuit associated with label-controlled input qubits of ansatz architecture for QNN, based on labelled first dataset 812

Determine universal circuit associated with ansatz architecture for prediction circuit associated with QNN, based on labelled first dataset 814

Determine prediction circuit based on combination of label-controlled circuit and universal circuit 816

Train prediction circuit based on labelled first dataset and initial state associated with QNN 818

Load fractionally weighted data portfolios on labelled qubits and label-controlled input qubits, wherein trained prediction circuit is configured to generate predictions associated with loaded fractionally weighted data portfolios 820

Stop

*FIG. 8*

<table>
<tr><td colspan="2">Europäisches Patentamt<br>European Patent Office<br>Office européen des brevets</td><td>**EUROPEAN SEARCH REPORT**</td><td>**Application Number**<br>EP 26 15 3195</td></tr>
</table>

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EDWARD FARHI ET AL: "Classification with Quantum Neural Networks on Near Term Processors", ARXIV.ORG CORNELL UNIVERSITY LIBRARY, 201 OLIN LIBRARY CORNELL UNIVERSITY ITHACA, NY 14853, 16 February 2018 (2018-02-16), XP081215976, DOI: 10.48550/arXiv.1802.06002 * the whole document * | 1-15 | INV.<br>G06N3/02<br>G06N3/09<br>G06N10/60 |
| A | YING CHEN ET AL: "Hybrid Quantum Neural Networks with Amplitude Encoding: Advancing Recovery Rate Predictions", ARXIV.ORG CORNELL UNIVERSITY LIBRARY, 201 OLIN LIBRARY CORNELL UNIVERSITY ITHACA, NY 14853, 27 January 2025 (2025-01-27), XP091941906, DOI: 10.48550/arXiv.2501.15828 * the whole document * | 1-15 | |
| A | JINDI WU ET AL: "MORE: Measurement and Correlation Based Variational Quantum Circuit for Multi-classification", ARXIV.ORG CORNELL UNIVERSITY LIBRARY, 201 OLIN LIBRARY CORNELL UNIVERSITY ITHACA, NY 14853, 21 July 2023 (2023-07-21), XP091571372, DOI: 10.48550/arXiv.2307.11875 * the whole document * | 1-15 | **TECHNICAL FIELDS SEARCHED (IPC)**<br><br>G06N |
| X,P | MOURYA SHARAN ET AL: "Contextual Quantum Neural Networks for Stock Price Prediction", ARXIV, 26 February 2025 (2025-02-26), pages 1-18, XP093381183, DOI: 10.48550/arXiv.2503.01884 * the whole document * | 1-15 | |

The present search report has been drawn up for all claims

| Place of search | Date of completion of the search | Examiner |
|---|---|---|
| The Hague | 22 April 2026 | Pijn, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)